# EUROPEAN PATENT APPLICATION

(11) **EP 4 750 131 A1**
(43) Date of publication of application: **27.05.2026**
(21) Application number: 24850876.4
(22) Date of filing: 31.07.2024
(51) Int. Cl.: H04W 24/04

(54) **COMMUNICATION METHOD AND APPARATUS**

(30) Priority: 09.08.2023 CN 202311003267
(71) Applicant: HUAWEI TECHNOLOGIES CO., LTD., Shenzhen 518129 (CN)
(72) Inventor: LI, Yongcui, Shenzhen, Guangdong 518129 (CN); NI, Hui, Shenzhen, Guangdong 518129 (CN); DENG, Taoyu, Shenzhen, Guangdong 518129 (CN)
(74) Representative: Isarpatent
(86) International application number: PCT/CN2024/108877
(87) International publication number: WO 2025/031231

(57) **Abstract**

A communication method and apparatus are provided. The method includes: in a session release procedure or a session relocation procedure of a first session, when a served first-type session related to first VPLMN roaming offloading information includes only the first session, a first session management network element deletes the stored first VPLMN roaming offloading information, where the first session is a home session offloading session, and the first VPLMN roaming offloading information is used to configure an EASDF network element for the first-type session. According to the method, when the first-type session served by a first session network element includes only the first session, the first session management network element deletes the originally stored VPLMN roaming offloading information, to obtain latest VPLMN roaming offloading information when a first-type session is generated subsequently, so that a probability that the first session management network element configures an EASDF network element by using wrong VPLMN roaming offloading information can be reduced, thereby improving communication efficiency.

## Description

### CROSS-REFERENCE TO RELATED APPLICATIONS

This application claims priority to Chinese Patent Application No. 202311003267.1, filed with the China National Intellectual Property Administration on August 9, 2023 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Edge computing (edge computing, EC) refers to moving a user plane function (user plane function, UPF) network element and a service processing capability downward to a network edge to implement local processing of distributed service traffic and avoid excessive concentration of the service traffic. In a home routed (home routed, HR) roaming (roaming) scenario, when a terminal device (for example, user equipment (User equipment, UE)) leaves a coverage area of a home public land mobile network (home public land mobile network, HPLMN) due to movement or other reasons, the UE may access a visited public land mobile network (visited public land mobile network, VPLMN) through EC deployment, and send some services (including sessions) that allow local traffic routing to a VPLMN edge hosting environment (edge hosting environment, EHE) for processing.

When the UE accesses the VPLMN, a home routed with session breakout (home routed with session breakout, HR-SBO) session is required for sending the some services that allow local traffic routing to the VPLMN for processing. In an HR-SBO session establishment process, a visited session management network element (for example, a visited session management function (visited session management function, V-SMF) network element) serving the session needs to obtain VPLMN specific offloading information (VPLMN specific offloading information) (or referred to as VPLMN roaming offloading information) from a home session management network element (for example, a home session management function (home session management function, H-SMF) network element) serving the session, and configure an edge application server discovery function (edge application server discovery function, EASDF) network element based on the VPLMN roaming offloading information, to support the UE in discovering and accessing a correct VPLMN edge hosting environment.

To reduce signaling redundancy, on a premise that the visited session management network element stores the VPLMN roaming offloading information, in the subsequent establishment process of the HR-SBO session served by the visited session management network element, the home session management network element of the HR-SBO session does not need to send complete VPLMN roaming offloading information again, but only needs to send an identifier of the VPLMN roaming offloading information. However, when a home roaming offloading policy of the UE changes or there is another policy change reason, the home session management network element may update the VPLMN roaming offloading information. If the visited session management network element cannot synchronously update the locally stored VPLMN roaming offloading information, the UE may not correctly send the some services that allow local traffic routing to the VPLMN for processing.

### SUMMARY

Embodiments of this application provide a communication method and apparatus, to reduce a probability that a session management network element configures an EASDF network element by using wrong VPLMN roaming offloading information, thereby improving communication efficiency.

According to a first aspect, an embodiment of this application provides a communication method, applied to a first session management network element. The method includes: in a session release procedure or a session relocation procedure of a first session, when a served first-type session related to first VPLMN roaming offloading information includes only the first session, the first session management network element deletes the stored first VPLMN roaming offloading information, where the first session is a home session offloading session, and the first VPLMN roaming offloading information is used to configure an EASDF network element for the first-type session.

According to this method, in the session release procedure or the session relocation procedure of the first session, the first session management network element may determine that the first-type session includes only the first session and delete the stored first VPLMN roaming offloading information, and in a session creation procedure of a subsequently created session, the first session management network element may obtain latest VPLMN roaming offloading information used to configure an EASDF network element for the first-type session, so that a probability that the first session management network element configures an EASDF network element by using wrong VPLMN roaming offloading information is reduced, thereby improving communication efficiency.

In a possible design, the first-type session related to the first VPLMN roaming offloading information has a same characteristic, and the same characteristic includes at least one of the following: a DNN, S-NSSAI, an HPLMN, a home session offloading session type, or a home session management network element that provides a service.

According to this design, each session in the first-type session has one or more same characteristics, and the first-type session is associated with the first VPLMN roaming offloading information. Therefore, the first-type session may share the first VPLMN roaming offloading information, thereby reducing storage and transmission of VPLMN roaming offloading information corresponding to the first-type session, and reducing signaling overheads. In addition, sessions with different characteristics may be separately associated with different VPLMN roaming offloading information, thereby improving accuracy of the VPLMN roaming offloading information, and improving communication efficiency.

In a possible design, the first session management network element deletes the first VPLMN roaming offloading information when a session context information set stored in the first session management network element includes only session context information of the first session, where the session context information set is used to store session context information of the first-type session. Based on this, the first session management network element may further delete, in the session release procedure or the session relocation procedure of the first session, the session context information of the first session that is stored in the session context information set.

According to this design, the first session management network element may determine, based on the locally stored session context information set, that the first-type session includes only the first session, thereby improving practicability and accuracy of the communication method.

In a possible design, the first session management network element deletes the first VPLMN roaming offloading information when a mapping relationship that is between an identifier of the first VPLMN roaming offloading information and session information of the first-type session and that is stored in the first session management network element includes only session information of the first session. Based on this, the first session management network element may further delete the session information of the first session in the session release procedure or the session relocation procedure of the first session.

According to this design, the first session management network element may determine, based on a mapping relationship between the locally stored VPLMN roaming offloading information and session information of a session, that the first-type session includes only the first session, thereby improving practicability and accuracy of the communication method.

In a possible design, the session information is a session identifier of a session or session context information of a session.

In a possible design, the first session management network element may further delete the identifier of the first VPLMN roaming offloading information when the served first-type session includes only the first session.

According to this design, the first session management network element may delete the identifier of the locally stored VPLMN roaming offloading information, so that in the session creation procedure of the subsequently created session, the first session management network element cannot provide or does not provide the identifier used for the VPLMN roaming offloading information. Therefore, the first session management network element can receive latest VPLMN roaming offloading information from a home session management network element of the subsequently created session, so that a probability that the first session management network element configures an EASDF network element by using wrong VPLMN roaming offloading information is reduced, thereby improving communication efficiency.

In a possible design, the first session management network element is a visited session management network element serving the first session.

In a possible design, the first session management network element may further send a session creation request to the second session management network element in a session creation procedure or a session relocation procedure of a second session, where the second session belongs to the first-type session, and the second session management network element is a home SMF network element serving the second session; and the first session management network element may further receive second VPLMN roaming offloading information from the second session management network element and store the second VPLMN roaming offloading information, where the second VPLMN roaming offloading information is used to configure an EASDF network element for a subsequently created first-type session.

According to this design, in the session creation procedure or the session relocation procedure of the second session, the first session management network element may obtain latest VPLMN roaming offloading information used to configure an EASDF network element for the first-type session, that is, the second VPLMN roaming offloading information, so that a probability that the first session management network element configures an EASDF network element by using wrong VPLMN roaming offloading information is reduced, thereby improving communication efficiency.

In a possible design, the session creation request further indicates that the first session management network element does not store the first VPLMN roaming offloading information.

In a possible design, the session creation request does not include the identifier of the first VPLMN roaming offloading information; or the session creation request includes a first indication, and the first indication indicates that the first session management network element does not store the first VPLMN roaming offloading information.

In a possible design, the first session management network element may further receive an identifier of the second VPLMN roaming offloading information from the second session management network element and store the identifier of the second VPLMN roaming offloading information.

In a possible design, before the session release procedure or the session relocation procedure of the first session, the method further includes: the first session management network element sends a session management request to a third session management network element in a session management procedure of the first session, where the session management request includes first verification information, the first verification information is obtained based on the stored first VPLMN roaming offloading information, the first verification information is used to verify whether the first VPLMN roaming offloading information stored in the first session management network element is the same as third VPLMN roaming offloading information stored in the third session management network element, the third session management network element is a home SMF network element serving the first session, and the third VPLMN roaming offloading information is VPLMN roaming offloading information that is related to the first session and that is stored in the third session management network element.

According to this design, the first session management network element may send the verification information corresponding to the first VPLMN roaming offloading information to the third session management network element, so that the third session management network element can determine, based on the verification information, whether the first VPLMN roaming offloading information is latest VPLMN roaming offloading information. In addition, the third session management network element can indicate, based on the determining result, VPLMN roaming offloading information used to configure an EASDF network element, so that a probability that the first session management network element configures an EASDF network element by using wrong VPLMN roaming offloading information is reduced, thereby improving communication efficiency.

According to a second aspect, an embodiment of this application provides a communication method, applied to a first session management network element. The method includes: in a session creation procedure or a session relocation procedure of a first session, the first session management network element sends a session creation request to a second session management network element when a session served by the first session management network element does not include any first-type session related to first VPLMN roaming offloading information, where the session creation request indicates that the first session management network element does not store the first VPLMN roaming offloading information; and the first session management network element receives the first VPLMN roaming offloading information from the second session management network element and stores the first VPLMN roaming offloading information, where the first session is a home session offloading session, the first session is related to the first VPLMN roaming offloading information, and the first VPLMN roaming offloading information is used to configure an EASDF network element for the first-type session.

According to this method, in the session creation procedure or the session relocation procedure of the first session, the first session management network element may determine that the session served by the first session management network element does not include any first-type session, and send, to the second session management network element, the session creation request indicating that the first VPLMN roaming offloading information is not stored, to receive latest VPLMN roaming offloading information from the second session management network element and store the latest VPLMN roaming offloading information, that is, the first VPLMN roaming offloading information, so that a probability that the first session management network element configures an EASDF network element by using wrong VPLMN roaming offloading information can be reduced, thereby improving communication efficiency.

In a possible design, the first-type session related to the first VPLMN roaming offloading information has a same characteristic, and the same characteristic includes at least one of the following: a DNN, S-NSSAI, an HPLMN, a home session offloading session type, or a home session management network element that provides a service.

In a possible design, the session creation request includes session allowed indication information and does not include an identifier of the first VPLMN roaming offloading information, and the session allowed indication information indicates that the first session is allowed to access the EASDF network element through a VPLMN.

In a possible design, the first session management network element sends the session creation request to the second session management network element when a session context information set stored in the first session management network element does not include session context information of any first-type session, where the session context information set is used to store the session context information of the first-type session. Based on this, the first session management network element may further update the session context information set in the session creation procedure or the session relocation procedure of the first session, where an updated session context information set includes session context information of the first session.

In a possible design, the first session management network element sends the session creation request to the second session management network element when the first session management network element does not store a mapping relationship between the identifier of the first VPLMN roaming offloading information and session information of the first-type session. Based on this, after receiving the first VPLMN roaming offloading information from the second session management network element and storing the first VPLMN roaming offloading information, the first session management network element may further establish the mapping relationship between the identifier of the first VPLMN roaming offloading information and the session information of the first-type session, where the mapping relationship includes session information of the first session.

In a possible design, the session information is a session identifier of a session or session context information of a session.

In a possible design, the first session management network element may further receive the identifier of the first VPLMN roaming offloading information from the second session management network element and store the identifier of the first VPLMN roaming offloading information.

In a possible design, the first session management network element is a visited session management network element serving the first session, and the second session management network element is a home SMF network element serving the first session.

According to a third aspect, an embodiment of this application provides a communication method, applied to a first session management network element. The method includes: the first session management network element sends a session management request to a second session management network element in a session management procedure of a first session, where the session management request includes first verification information, the first verification information is obtained based on stored first VPLMN roaming offloading information, the first session is a home session offloading session, the first session is related to the first VPLMN roaming offloading information, and the first VPLMN roaming offloading information is used to configure an EASDF network element for a first-type session; and the first session management network element receives a session management response from the second session management network element, where the session management response indicates whether to configure an EASDF network element for the first session by using the first VPLMN roaming offloading information.

According to this method, the first verification information is obtained based on the first VPLMN roaming offloading information stored in the first session management network element, the second session management network element may determine, based on the first verification information sent by the first session management network element, whether the first VPLMN roaming offloading information stored in the first session management network element is the same as latest VPLMN roaming offloading information stored in the second session management network element, and indicate, through the session management response, whether to configure an EASDF network element for the first-type session by using the first VPLMN roaming offloading information, so that a probability that the first session management network element configures an EASDF network element by using wrong VPLMN roaming offloading information can be reduced, thereby improving communication efficiency.

In a possible design, the first-type session related to the first VPLMN roaming offloading information has a same characteristic, and the same characteristic includes at least one of the following: a DNN, S-NSSAI, an HPLMN, a home session offloading session type, or a home session management network element that provides a service.

In a possible design, when the session management response includes second VPLMN roaming offloading information, the first session management network element may further delete the first VPLMN roaming offloading information, and store the second VPLMN roaming offloading information, where the second VPLMN roaming offloading information is used to configure an EASDF network element for the first session.

In a possible design, when the session management response includes an identifier of the second VPLMN roaming offloading information, the first session management network element may further delete an identifier of the first VPLMN roaming offloading information, and store the identifier of the second VPLMN roaming offloading information.

In a possible design, the first session management network element may further perform hash calculation on the first VPLMN roaming offloading information, to obtain the first verification information.

In a possible design, the session management request further includes session allowed indication information and/or the identifier of the first VPLMN roaming offloading information, and the session allowed indication information indicates that the first session is allowed to access the edge application server discovery network element through a VPLMN.

In a possible design, the first session management network element is a visited session management network element serving the first session, and the second session management network element is a home SMF network element serving the first session.

In a possible design, before a session creation procedure of the first session, in a session management procedure of a second session, the first session management network element may further receive the first VPLMN roaming offloading information from a third session management network element and store the first VPLMN roaming offloading information, where the second session is a home session offloading session, the second session is related to the first VPLMN roaming offloading information, and the third session management network element is a home SMF network element serving the second session.

According to a fourth aspect, an embodiment of this application provides a communication method, applied to a second session management network element. The method includes: the second session management network element receives a session management request from a first session management network element in a session management procedure of a first session, where the session management request includes first verification information, the first verification information is obtained based on first VPLMN roaming offloading information stored in the first session management network element, the first session is a home session offloading session, and the first session is related to stored second VPLMN roaming offloading information; and the second session management network element sends a session management response to the first session management network element based on the first verification information, where the session management response indicates whether to configure an EASDF network element for a first-type session related to the second VPLMN roaming offloading information by using the first VPLMN roaming offloading information.

According to this method, the first session management network element may determine, based on whether the second VPLMN roaming offloading information has been sent to the second session management network element, to send the session management response to the second session management network element. The session management response may indicate whether to configure an EASDF network element for the first-type session by using the first VPLMN roaming offloading information stored in the second session management network element. Therefore, an EASDF network element can be prevented from being configured when latest VPLMN roaming offloading information has never been sent to the second session management network element, so that a probability that the second session management network element configures an EASDF network element by using wrong VPLMN roaming offloading information can be reduced, thereby improving communication efficiency.

In a possible design, the first-type session related to the second VPLMN roaming offloading information has a same characteristic, and the same characteristic includes at least one of the following: a DNN, S-NSSAI, an HPLMN, a home session offloading session type, or a visited session management network element that provides a service.

In a possible design, a process in which the second session management network element sends the session management response to the first session management network element includes: the second session management network element obtains second verification information, where the second verification information is obtained based on the second VPLMN roaming offloading information stored in the second session management network element, and the second VPLMN roaming offloading information is used to configure an EASDF network element for the first session; when the first verification information is the same as the second verification information, the second session management network element sends a first session management response to the first session management network element, where the first session management response does not include the second VPLMN roaming offloading information; or when the first verification information is different from the second verification information, the second session management network element sends a second session management response to the first session management network element, where the second session management response includes the second VPLMN roaming offloading information.

In a possible design, if the first verification information is obtained by performing hash calculation based on the first VPLMN roaming offloading information, a method for obtaining the second verification information by the second session management network element includes: the second session management network element performs hash calculation on the second VPLMN roaming offloading information, to obtain the second verification information.

In a possible design, the session management request further includes session allowed indication information and/or an identifier of the first VPLMN roaming offloading information, and the session allowed indication information indicates that the first session is allowed to access the edge application server discovery network element through a VPLMN.

In a possible design, the first session management network element is a visited session management network element serving the first session, and the second session management network element is a home SMF network element serving the first session.

According to a fifth aspect, an embodiment of this application provides a communication method, applied to a first session management network element. The method includes: the first session management network element receives a session management request from a second session management network element in a session management procedure of a first session; and the first session management network element sends a session management response to the second session management network element based on stored first status information, where the session management response indicates whether to configure an EASDF network element for the first session by using first VPLMN roaming offloading information stored in the second session management network element; and the first session is a home session offloading session, the first session is related to the first VPLMN roaming offloading information, the first status information indicates whether second VPLMN roaming offloading information has been sent to the second session management network element, and the second VPLMN roaming offloading information is latest VPLMN roaming offloading information that is stored in the first session management network element and that is used to configure an EASDF network element for the first session.

In a possible design, the first-type session related to the first VPLMN roaming offloading information has a same characteristic, and the same characteristic includes at least one of the following: a DNN, S-NSSAI, an HPLMN, a home session offloading session type, or a visited session management network element that provides a service.

In a possible design, when the first status information indicates that the second VPLMN roaming offloading information has never been sent to the second session management network element, the session management response includes the second VPLMN roaming offloading information; or when the first status information indicates that the second VPLMN roaming offloading information has been sent to the second session management network element, the session management response does not include the second VPLMN roaming offloading information.

In a possible design, when the first status information indicates that the second VPLMN roaming offloading information has never been sent to the second session management network element, after the first session management network element sends the session management response to the first session management network element based on the stored first status information, the first session management network element may further modify the first status information, so that the first status information indicates that the second VPLMN roaming offloading information has been sent to the second session management network element.

In a possible design, the session management request further includes session allowed indication information and/or an identifier of the first VPLMN roaming offloading information, and the session allowed indication information indicates that the first session is allowed to access the EASDF network element through a VPLMN.

In a possible design, the first session management network element is a home SMF network element serving the first session, and the second session management network element is a visited session management network element serving the first session.

For technical effects that can be achieved in the fifth aspect, refer to descriptions of technical effects that can be achieved in any possible design of the fourth aspect. Repeated content is not described.

According to a sixth aspect, an embodiment of this application provides a communication method. The method includes: in a session creation procedure or a session relocation procedure of a first session, when a session served by a first session management network element does not include any first-type session related to first VPLMN roaming offloading information, the first session management network element sends the first VPLMN roaming offloading information to a second session management network element, where the first session is a home session offloading session, the first session is related to the first VPLMN roaming offloading information, and the first VPLMN roaming offloading information is used to configure an EASDF network element for the first-type session.

According to this method, in the session creation procedure or the session relocation procedure of the first session, when the served session does not include any first-type session, the first session management network element may send, to the second session management network element, latest VPLMN roaming offloading information stored in the first session management network element, that is, the first VPLMN roaming offloading information, so that a probability that the second session management network element configures an EASDF network element by using wrong VPLMN roaming offloading information can be reduced, thereby improving communication efficiency.

In a possible design, the first-type session related to the first VPLMN roaming offloading information has a same characteristic, and the same characteristic includes at least one of the following: a DNN, S-NSSAI, an HPLMN, a home session offloading session type, or a visited session management function SMF network element that provides a service.

In a possible design, a first session creation request includes session allowed indication information and does not include an identifier of the first VPLMN roaming offloading information, and the session allowed indication information indicates that the first session is allowed to access the EASDF network element through a VPLMN.

In a possible design, the first session management network element sends the first VPLMN roaming offloading information to the second session management network element when a session context information set stored in the first session management network element does not include session context information of any first-type session, where the session context information set is used to store the session context information of the first-type session. Based on this, the first session management network element may further update the session context information set in the session creation procedure or the session relocation procedure of the first session, where an updated session context information set includes session context information of the first session.

In a possible design, the first session management network element sends the first VPLMN roaming offloading information to the second session management network element when the first session management network element does not store a mapping relationship between the identifier of the first VPLMN roaming offloading information and session information of the first-type session. Based on this, after sending the first VPLMN roaming offloading information to the second session management network element, the first session management network element may further establish the mapping relationship between the identifier of the first VPLMN roaming offloading information and the session information of the first-type session, where the mapping relationship includes session information of the first session.

In a possible design, the session information is a session identifier of a session or session context information of a session.

In a possible design, the first session management network element may further send the identifier of the first VPLMN roaming offloading information to the second session management network element.

In a possible design, the first session management network element is a home SMF network element serving the first session, and the second session management network element is a visited session management network element serving the first session.

According to a seventh aspect, an embodiment of this application provides a communication method, applied to a first session management network element. The method includes: in a session release procedure or a session relocation procedure of a first session, the first session management network element records first status information when a served first-type session related to first VPLMN roaming offloading information includes only the first session, where the first status information indicates the first session management network element to send the first VPLMN roaming offloading information to a second session management network element in a session creation procedure or a session relocation procedure of a subsequently created second session; and the first session is a home session offloading session, the second session is a home session offloading session, the second session is related to the first VPLMN roaming offloading information, and the first VPLMN roaming offloading information is used to configure an EASDF network element for the first-type session.

According to this method, in the session release procedure or the session relocation procedure of the first session, when the first-type session served by the first session network element includes only the first session, the first session management network element may send, to the second session management network element, latest VPLMN roaming offloading information stored in the first session management network element, that is, the first VPLMN roaming offloading information, so that a probability that the second session management network element configures an EASDF network element by using wrong VPLMN roaming offloading information can be reduced, thereby improving communication efficiency.

In a possible design, the first-type session related to the first VPLMN roaming offloading information has a same characteristic, and the same characteristic includes at least one of the following: a DNN, S-NSSAI, an HPLMN, a home session offloading session type, or a visited session management network element that provides a service.

In a possible design, the first session management network element records the first status information when a session context information set stored in the first session management network element includes only session context information of the first session, where the session context information set is used to store session context information of the first-type session. Based on this, the first session management network element may further delete, in the session release procedure or the session relocation procedure of the first session, the session context information of the first session that is stored in the session context information set.

In a possible design, the first session management network element records the first status information when a mapping relationship that is between an identifier of the first VPLMN roaming offloading information and session information of the first-type session and that is stored in the first session management network element includes only session information of the first session. Based on this, the first session management network element may further delete the session information of the first session in the session release procedure or the session relocation procedure of the first session.

In a possible design, the session information is a session identifier of a session or session context information of a session.

In a possible design, the first status information further indicates to send the identifier of the first VPLMN roaming offloading information to the second session management network element in the session creation procedure or the session relocation procedure of the subsequently created second session.

In a possible design, the method further includes: the first session management network element is a home SMF network element serving the first session, and the second session management network element is a visited session management network element serving the second session.

According to an eighth aspect, this application further provides a communication apparatus. The communication apparatus may perform the foregoing method designs. The communication apparatus may be a chip or a circuit that can perform functions corresponding to the foregoing methods, or a device including the chip or the circuit.

In a possible design, the communication apparatus includes a communication unit, configured to receive and send data; and a processing unit, configured to implement the steps in the foregoing methods. The functions may be implemented by hardware, or may be implemented by hardware executing corresponding software. The hardware or the software includes one or more units corresponding to the foregoing functions.

According to a ninth aspect, this application further provides a communication apparatus. The communication apparatus may perform the foregoing method designs. The communication apparatus includes: a memory, configured to store computer-executable program code; and a processor, where the processor is coupled to the memory. The program code stored in the memory includes instructions. When the processor executes the instructions, the communication apparatus or a device in which the communication apparatus is installed is caused to perform the method in any one of the foregoing possible designs.

The communication apparatus may further include a communication interface. Alternatively, if the communication apparatus is a chip or a circuit, the communication interface may be an input/output interface of the chip, for example, an input/output pin.

According to a tenth aspect, this application provides a computer-readable storage medium. The computer-readable storage medium stores a computer program. When the computer program is run on an apparatus, the method in any one of the foregoing possible designs is performed.

According to an eleventh aspect, this application provides a computer program product. The computer program product includes a computer program. When the computer program is run on an apparatus, the method in any one of the foregoing possible designs is performed.

According to a twelfth aspect, this application provides a communication system, where the communication system includes one or more apparatuses implemented as the communication apparatus in the eighth aspect and/or the communication apparatus in the ninth aspect.

According to a thirteenth aspect, this application provides a chip. The chip includes a processor and a memory. The processor is coupled to the memory, and is configured to read a computer program stored in the memory, to perform the method in any one of the foregoing possible designs.

### BRIEF DESCRIPTION OF DRAWINGS

FIG. 1 is a diagram of an HR roaming scenario according to an embodiment of this application;
FIG. 2 is a diagram of another HR roaming scenario according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is an example diagram of a communication method according to an embodiment of this application;
FIG. 10 is an example diagram of another communication method according to an embodiment of this application;
FIG. 11 is an example diagram of another communication method according to an embodiment of this application;
FIG. 12 is an example diagram of another communication method according to an embodiment of this application;
FIG. 13 is an example diagram of another communication method according to an embodiment of this application;
FIG. 14 is an example diagram of another communication method according to an embodiment of this application;
FIG. 15 is a diagram of a structure of a communication apparatus according to an embodiment of this application; and
FIG. 16 is a diagram of a structure of another communication apparatus according to an embodiment of this application.

### DESCRIPTION OF EMBODIMENTS

To make objectives, technical solutions, and beneficial effects of this application clearer and more comprehensible, the following further describes this application in detail with reference to accompanying drawings and embodiments. It should be understood that the specific embodiments described herein are merely used to explain this application but are not intended to limit this application.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one" means one or more, and "a plurality of" means two or more. In the descriptions of this application, terms such as "first" and "second" are merely used for a purpose of distinguishing and description, and should not be understood as indicating or implying relative importance, or as indicating or implying an order.

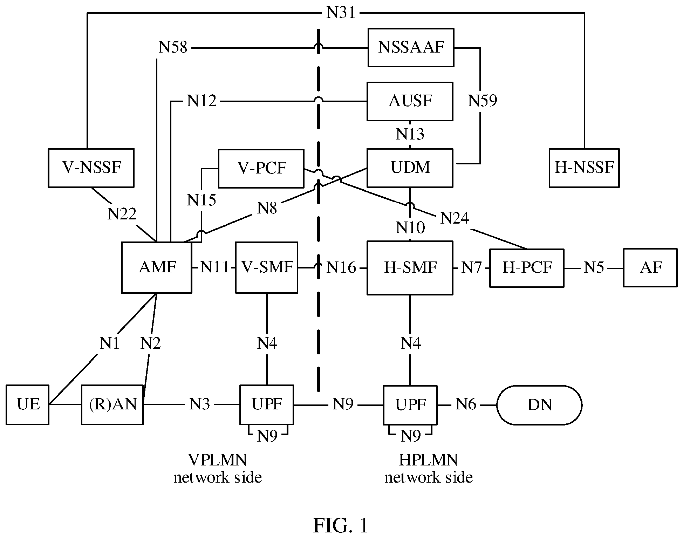

In a diagram of an HR roaming scenario shown in FIG. 1, the network architecture includes three parts: a terminal device part, a data network (data network, DN) part, and an operator network part. The following briefly describes functions of some network elements in the architecture.

The operator network may include but is not limited to one or more of the following network elements: an application function (Application Function, AF) network element, a network exposure function (network exposure function, NEF) network element (not shown in the figure), a subscriber data management (unified data management, UDM) network element (not shown in the figure), a policy control function (Policy Control Function, PCF) network element, an access and mobility management function (Access and Mobility Management Function, AMF) network element, a session management function (session management function, SMF) network element, a radio access network (radio access network, RAN) device, a user plane function (user plane function, UPF) network element, a network slice selection function (network slice selection function, NSSF) network element, an authentication server function (authentication server function, AUSF) network element, a network slice-specific authentication and authorization function (network slice-specific authentication and authorization function, NSSAAF), and the like. In the operator network, a part other than the radio access network part may be referred to as a core network part.

During specific implementation, the terminal device in embodiments of this application may be a device configured to implement a wireless communication function. The terminal device may be UE, an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device or a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or fixed.

The terminal device may establish a connection to the operator network through an interface (for example, N1) provided by the operator network, and use a service like data and/or voice provided by the operator network. The terminal device may further access the DN through the operator network, and use an operator service deployed on the DN and/or a service provided by a third party. The third party may be a service party other than the operator network and the terminal device, and may provide a service like another data and/or voice for the terminal device. A specific representation form of the third party may be specifically determined based on an actual application scenario, and is not limited herein.

The AF network element mainly transfers a requirement of an application side for a network side, for example, the AF network element supports a QoS requirement, user status event subscription, service route selection, exposure of a network access capability, and interaction with a policy decision network element for policy control. The AF may be a third-party functional entity, or may be an application service deployed by an operator. The AF network element may alternatively be an application server, a third-party device, or the like.

The UPF network element, serving as an interface UPF with the data network, completes functions such as user plane data forwarding, session/flow level-based charging statistics collection, and bandwidth limiting. The UPF network element is mainly responsible for user packet processing, for example, forwarding and charging statistics collection. In embodiments of this application, based on deployment of an operator, the operator network may include one or more UPF network elements, and a relationship may be established between the UPF network elements through an interface (for example, N9). In a session, a UPF network element that is directly connected to the DN through an N6 interface is referred to as a PSA (PDU session anchor, PDU session anchor). In the HR roaming scenario, the operator network includes a visited UPF (visited UPF, V-UPF) network element and a home UPF (home UPF, H-UPF) network element.

The AMF network element mainly performs functions such as mobility management, access authentication/authorization, and the like. In addition, the AMF network element is further responsible for transferring a user policy between the UE and the PCF. The mobility management includes: user location update, user network registration, user handover, and the like.

The SMF network element mainly performs functions such as session management, execution of a PCF-delivered control policy, UPF selection, UE Internet Protocol (internet protocol, IP) address allocation. The session management includes session establishment, session modification, and session release. In the HR roaming scenario, the operator network includes a visited SMF network element (namely, a V-SMF in the figure) and a home SMF network element (namely, an H-SMF in the figure).

The PCF network element is mainly responsible for policy control functions such as charging on a session and a service flow-level, QoS bandwidth guarantee and mobility management, and UE policy decision. For example, the PCF network element may support a unified policy management network behavior. The PCF network element may further provide a policy rule for the control plane function network element, and the control plane function network element executes the policy rule. The PCF network element may further obtain subscriptionrelated information from the UDR to make a policy decision. In the HR roaming scenario, the operator network includes a visited PCF (visited PCF, V-PCF) network element and a home PCF (home PCF, H-PCF) network element.

The NSSF network element is configured to select a network slice for the terminal device. In the HR roaming scenario, the operator network includes a visited NSSF (visited NSSF, V-NSSF) network element and a home PCF (home NSSF, H-NSSF) network element.

The DN is a network located outside the operator network. The operator network may access a plurality of DNs, and a plurality of services may be deployed on the DN, to provide services such as data and/or voice for the terminal device. Generally, a domain name system (domain name system, DNS) server (server) may be further deployed on the DN, and is configured to process a DNS message (including a DNS request (query) and a DNS response (response)), to achieve an objective of obtaining a service address by the UE. For example, the DN is a private network of a smart factory, a sensor installed in a workshop of the smart factory may be the terminal device, a control server of the sensor is deployed in the DN, and the control server may serve the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be the terminal device, and the mobile phone or the computer of the employee may access information, data resources, and the like on the internal office network of the company.

The foregoing network elements or functions may be network elements in a hardware device, may be software functions run on dedicated hardware, or may be instantiated virtualization functions on a platform (for example, a cloud platform). Optionally, the network elements or functions may be implemented by one device, may be jointly implemented by a plurality of devices, or may be a functional module in one device. This is not specifically limited in embodiments of this application.

It should be noted that different operators correspond to different PLMNs. The PLMN is used to distinguish different mobile communication operators in a country or region. A service area may include one or more public land mobile communication networks. The PLMN is a network built and operated by a government or an operator authorized by the government, to provide land mobile communication services for the public. A PLMN is represented by a mobile country code and a mobile network code (mobile network code, MNC). The MNC of China Mobile is 00, and the MNC of China Unicom is 01.

In the HR roaming scenario, a PLMN to which the terminal device belongs or subscribes is referred to as an HPLMN. Correspondingly, the HPLMN is used to represent a home operator of a user. When UE leaves a coverage area of the HPLMN due to movement or other reasons, if a PLMN meets a roaming condition, the UE can access and visit the PLMN, and the PLMN is referred to as a VPLMN. Correspondingly, the VPLMN is used to represent an operator that the user may visit. In the communication field, roaming scenarios are usually classified into local breakout (local breakout, LBO) roaming and HR roaming based on whether a user plane of the UE is terminated at the VPLMN or the HPLMN.

The roaming condition may include: (1) The PLMN may cover a current location of the UE. (2) An operator corresponding to the PLMN and an operator corresponding to the HPLMN of the UE sign a roaming agreement (a commercial agreement that is between operators and whose content may include but is not limited to issues such as services and charging manners provided for subscribers of a network of a peer operator).

In the HR roaming scenario shown in FIG. 1, an example in which the terminal device is UE is used to describe interfaces between parts as follows:

On a network side corresponding to the VPLMN, the UE accesses a network through the (R)AN network element, and the UE may communicate with the AMF network element through an N1 interface; the (R)AN network element communicates with the visited AMF network element through an N2 interface; the (R)AN network element communicates with the UPF network element in the VPLMN through an N3 interface; the visited SMF network element communicates with the UPF network element in the VPLMN through an N4 interface; the AMF network element communicates with the visited AMF network element through an N11 interface; the AMF network element communicates with the visited PCF network element through an N15 interface; the AMF network element communicates with the visited NSSF network element through an N22 interface; and a plurality of UPF network elements may communicate with each other through an N9 interface.

Between the network side corresponding to the VPLMN and a network side corresponding to the HPLMN, the visited SMF network element communicates with the home SMF network element through an N16 interface; the AMF network element communicates with the UDM network element in the HPLMN through an N8 interface; the AMF network element communicates with the AUSF network element in the HPLMN through an N12 interface; the AMF network element communicates with the NSSAAF network element in the HPLMN through an N58 interface; the visited PCF network element communicates with the home PCF network element through an N24 interface; the visited NSSF network element communicates with the home NSSF network element through an N31 interface; and a plurality of UPF network elements may communicate with each other through the N9 interface.

On the network side corresponding to the HPLMN, the UPF network element in the HPLMN communicates with the home SMF network element through an N4 interface; the UPF network element in the HPLMN communicates with the DN through an N6 interface; the home SMF network element communicates with the home PCF network element through an N7 interface; the home SMF network element communicates with the UDM network element in the HPLMN through an N10 interface; the home PCF network element communicates with the AF network element through an N5 interface; the UDM network element communicates with the AUSF network element through an N13 interface; the UDM network element communicates with the NSSAAF network element through an N59 interface; and a plurality of UPF network elements may communicate with each other through the N9 interface.

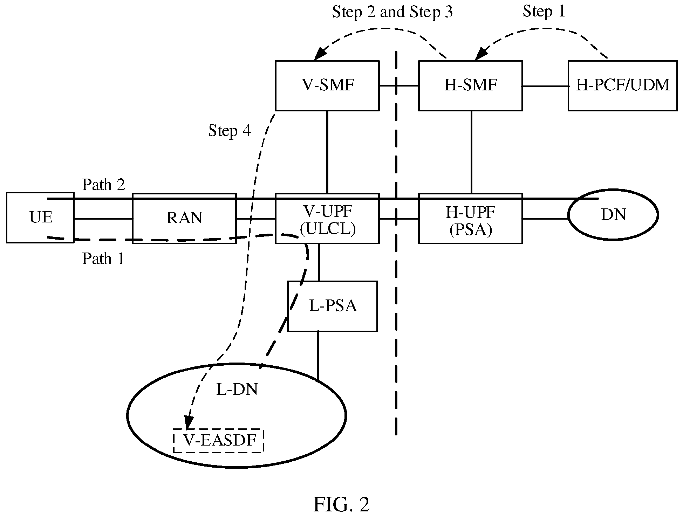

In a diagram of an HR roaming scenario shown in FIG. 2, the network architecture includes three parts: a terminal device part, a DN part, and an operator network part. For the terminal device part, refer to the descriptions of the terminal device part in FIG. 1. The DN part includes a local (local) DN (L-DN) in a VPLMN, at least one EASDF network element (for example, a V-EASDF) deployed on the L-DN, and a DN in an HPLMN, where the local DN is a DN in the VPLMN. The operator network part includes a RAN network element, a visited UPF (V-UPF) network element (for example, an uplink classifier (uplink classifier/branching point, ULCL)), a visited SMF network element, a home SMF network element, an H-PCF network element in the HPLMN (or a UDM network element in the HPLMN), and a home UPF (V-UPF) network element (for example, a PSA network element). The operator network part may further include a local PSA (L-PSA) network element. For descriptions of functions of some network elements, refer to the descriptions of the network elements in FIG. 1.

In the HR roaming scenario shown in FIG. 2, an example in which the terminal device is UE is used. The UE may create a plurality of sessions, the UE may be a terminal device that roams from the HPLMN to the VPLMN through the plurality of sessions, and a roaming path between the sessions of the UE may include a path 1 and a path 2. In the path 1, the UE communicates with the DN in the HPLMN through the RAN network element, the visited UPF network element, and the home PSA network element. In the path 2, the UE communicates with the local DN through the RAN network element and the visited UPF network element.

To prevent a V-SMF network element from configuring an EASDF network element by using wrong VPLMN roaming offloading information, an embodiment of this application provides a communication method. The following describes the communication method provided in embodiments of this application with reference to the accompanying drawings. In the accompanying drawings corresponding to embodiments of this application, all steps represented by dashed lines are optional steps. Embodiments of this application are applicable to the HR roaming scenario shown in FIG. 1 or FIG. 2.

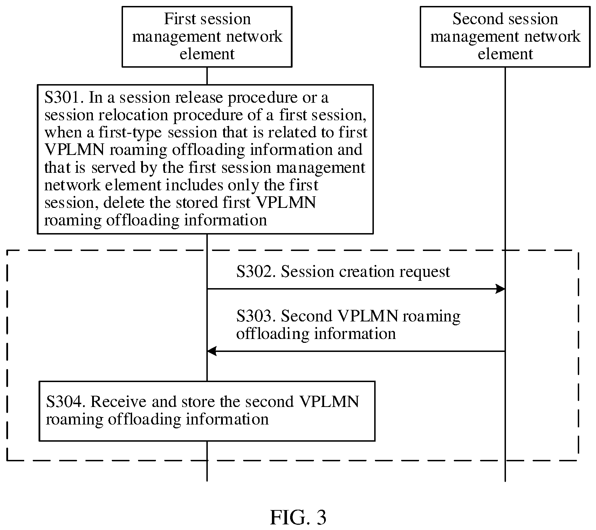

As shown in FIG. 3, a communication method provided in an embodiment of this application may include the following steps.

S301. In a session release procedure or a session relocation procedure of a first session, when a first-type session that is related to first VPLMN roaming offloading information and that is served by a first session management network element includes only the first session, delete the stored first VPLMN roaming offloading information. The first session is a home roaming offloading session served by the first session management network element, and the first VPLMN roaming offloading information is used to configure an EASDF network element and/or configure an offloading rule of an offloading point for the first-type session.

Optionally, the first session management network element may be a visited SMF network element (also referred to as a V-SMF network element or a V-SMF) serving the first session.

Optionally, the first session management network element may further serve a second-type session related to other VPLMN roaming offloading information, and the action of deleting the first VPLMN roaming offloading information by the first session management network element does not affect providing a service for the second-type session. In other words, when the first VPLMN roaming offloading information of the first-type session is deleted or modified, the first session management network element can still serve the second-type session by using the other stored VPLMN roaming offloading information.

The following briefly describes a session relocation procedure (or referred to as a session handover procedure) by using an example. The session relocation procedure may be a procedure in which a session (for example, the first session) is relocated from a target visited SMF network element to a source visited SMF network element. The session relocation procedure is a procedure in which the visited SMF network element is inserted/changed/deleted due to movement of UE, for example, a handover procedure. In step S301, in the session relocation procedure of the first session, the first session management network element is a target visited SMF network element of the first session.

For example, the UE has created a session A, and a V-SMF 1 (that is, the target visited SMF network element) serves the session A in a first time period. Because the UE moves to a new area, Xn-based handover occurs, but the V-SMF 1 cannot serve the new area. That is, when the UE experiences Xn-based handover, the V-SMF 1 cannot serve the UE. In this case, in an Xn-based handover procedure, change of the V-SMF is triggered, for example, the V-SMF is changed to a V-SMF 2 (that is, the source visited SMF network element) that can serve the new area. The V-SMF 2 may serve an existing session (for example, a session B) or a subsequently created session of the UE in a second time period (the second time period is a time period after the first time period). In this way, if the V-SMF serving the session A is changed from the V-SMF 1 to the V-SMF 2, session context (SM context) on the V-SMF 1 needs to be sent to the V-SMF 2. When the V-SMF 1 and the V-SMF 2 are in a same public land mobile network (public land mobile network, PLMN), the transmitted session context information includes VPLMN roaming offloading information. The transmitted session context information may further include an identifier of the VPLMN roaming offloading information.

Therefore, in a session relocation procedure of the session A, if the session A is the last first-type session of the V-SMF 1, after the V-SMF serving the session A is changed to the V-SMF 2, the V-SMF 1 no longer serves any first-type session. In this scenario, although the V-SMF 1 as the target visited SMF network element does not perform a session release procedure, a same effect is achieved. This scenario is also protected in the solutions of this application.

It should be understood that, in embodiments of this application, same VPLMN roaming offloading information may be used when EASDF network elements are configured for sessions related to same VPLMN roaming offloading information. In other words, EASDF network elements are configured by using the first VPLMN roaming offloading information for all sessions belonging to the first-type session, and/or offloading rules of offloading points are configured by using the first VPLMN roaming offloading information for all the sessions belonging to the first-type session.

Optionally, the first session management network element may further delete an identifier of the first VPLMN roaming offloading information when the first-type session includes only the first session. For example, the identifier of the first VPLMN roaming offloading information is an offload identifier (offload Identifier, offload ID) of the first VPLMN roaming offloading information, and the offload ID of the first VPLMN roaming offloading information indicates that the first session management network element has stored the first VPLMN roaming offloading information. The visited SMF network element serving the first session may obtain the offload ID of the first VPLMN roaming offloading information from a home SMF network element (also referred to as an H-SMF network element or an H-SMF) serving the first session. Optionally, the offload ID of the first VPLMN roaming offloading information may be configured on the home SMF network element serving the first session, or the offload ID of the first VPLMN roaming offloading information may be obtained by the home SMF network element serving the first session from a UDM network element or an H-PCF network element. For an identifier of VPLMN roaming offloading information that subsequently appears in this application, refer to the descriptions herein. Details are not described again below.

The following uses an example to describe a time point for deleting the first VPLMN roaming offloading information. It is assumed that the visited SMF network element of the first session is a V-SMF network element, and the home SMF network element of the first session is an H-SMF network element. For example, in the session release procedure or the session relocation procedure of the first session, after sending a protocol data unit (protocol data unit, PDU) session update request/reply message (for example, nsmf_PDU session_update response) to the H-SMF network element to initiate session release or acknowledge session release, the V-SMF network element deletes the stored first VPLMN roaming offloading information. For another example, in the session release procedure or the session relocation procedure of the first session, before or after initiating session release and sending a PDU session release request message (for example, nsmf_PDU session_release request) to the H-SMF network element, the V-SMF network element deletes the stored first VPLMN roaming offloading information. For another example, the V-SMF network element deletes the stored first VPLMN roaming offloading information after the session release procedure or the session relocation procedure of the first session ends.

It should be noted that, in a session management procedure of a first-type session served by the visited SMF network element, if a session management request includes the offload ID of the first VPLMN roaming offloading information, it indicates that the visited SMF network element serving the first-type session has stored the first VPLMN roaming offloading information. The session management procedure provided in this application includes a session creation procedure, a session update procedure, and a session relocation procedure. Correspondingly, the home SMF network element serving the first-type session does not need to send the VPLMN roaming offloading information to the visited SMF network element serving the first-type session, so that signaling overheads between the visited SMF network element and the home SMF network element can be reduced.

Optionally, the first-type session related to the first VPLMN roaming offloading information has a same characteristic, and the same characteristic includes at least one of the following: a data network identifier (data network name, DNN), single network slice selection assistance information (single network slice selection assistance information, S-NSSAI), an HPLMN, an HR-SBO session type, or a home SMF network element that provides a service. For example, sessions of a same home SMF network element have a same characteristic. In other words, the first-type session is a type of HR-SBO session served by a same home SMF network element. For another example, sessions with a same DNN and/or same S-NSSAI have a same characteristic. In other words, the first-type session is an HR-SBO session corresponding to a same DNN and/or same S-NSSAI.

In a possible design, the first session management network element determines, in the following manner 1 and manner 2, that the first-type session includes only the first session.

Manner 1. Delete the first VPLMN roaming offloading information when a session context information set stored in the first session management network element includes only session context information of the first session, where the session context information set is used to store session context information of the first-type session.

Optionally, the session context information of the first session that is stored in the session context information set is deleted in the session release procedure or the session relocation procedure of the first session. Optionally, the session context information set is deleted in the session release procedure or the session relocation procedure of the first session.

Optionally, the session context information set is not a unique session context information set stored in the first session management network element. Therefore, the action of determining that "the session context information set stored in the first session management network element includes only the session context information of the first session" in the manner 1 may be specific to only one context information set. For example, the first session management network element may separately create a context information set for the first-type session and the second-type session, where one context information set is used to store the session context information of the first-type session, and the other context information set is used to store session context information of the first-type session. It should be understood that a quantity of context information sets is not limited in embodiments of this application. For a context information set that subsequently appears in this application, refer to the descriptions herein. Details are not described again below.

Manner 2. Delete the first VPLMN roaming offloading information when a mapping relationship that is stored in the first session management network element and that is between the identifier of the first VPLMN roaming offloading information and session information of the first-type session includes only session information of the first session.

Optionally, the session information of the first session is deleted in the session release procedure or the session relocation procedure of the first session. The session information may be a session identifier of a session or session context information of a session. For example, the session identifier of the first VPLMN roaming offloading information is the offload ID. For session information that subsequently appears in this application, refer to the descriptions herein. Details are not described again below.

Optionally, the mapping relationship between the identifier of the first VPLMN roaming offloading information and the session information of the first-type session is deleted in the session release procedure or the session relocation procedure of the first session.

Optionally, in this embodiment of this application, after deleting the first VPLMN roaming offloading information in S301, if the first session management network element continues to serve the first-type session, the first session management network element may further continue to obtain, from a home SMF network element of a subsequently served session, latest VPLMN roaming offloading information used to configure an EASDF network element for the first-type session. For a specific process, refer to descriptions of the following steps S302 to S304.

S302. The first session management network element sends a session creation request to a second session management network element in a session creation procedure or a session relocation procedure of a second session; and correspondingly, the second session management network element receives the session creation request from the first session management network element. The second session is a home session offloading session, the second session belongs to the first-type session, and the second session management network element is a home SMF network element serving the second session.

Optionally, the home session offloading session may be an HR-SBO session, or is a session served by two SMFs that have different service areas, or the like.

For the session relocation procedure of the second session, refer to the example for describing the session relocation procedure in step S301. In step S302, the first session management network element may be a source visited SMF network element of the second session. It should be understood that, in the session relocation procedure in this embodiment of this application, the session creation request may be a request for relocating a session. For example, in step S302, the session creation request may be a request for relocating the second session.

In a possible design, the session creation request further indicates that the first session management network element does not store the first VPLMN roaming offloading information. An indication manner of the session creation request includes a design 1 and a design 2.

Design 1. The session creation request does not include the identifier of the first VPLMN roaming offloading information. In step S301, the first session management network element has deleted the locally stored first VPLMN roaming offloading information and the identifier of the first VPLMN roaming offloading information. Therefore, when establishing a new session (for example, the second session), that is, in the session creation procedure of the second session, the first session management network element cannot provide or does not provide an identifier of VPLMN roaming offloading information used to configure an EASDF network element for the first-type session. That is, the session creation request definitely does not include the identifier of the first VPLMN roaming offloading information.

Design 2. The session creation request includes a first indication, and the first indication indicates that the first session management network element does not store the first VPLMN roaming offloading information.

For an indication manner in which a session creation request that subsequently appears in this application indicates that the VPLMN roaming offloading information is not stored, refer to the descriptions herein. Details are not described again below.

S303. The second session management network element sends second VPLMN roaming offloading information to the first session management network element.

Optionally, the second session management network element may further send an identifier of the second VPLMN roaming offloading information to the first session management network element.

Optionally, the step that the second session management network element sends the second VPLMN roaming offloading information to the first session management network element includes:
Step 1. After receiving the session creation request for the second session, the second session management network element obtains a second VPLMN roaming offloading policy from the UDM network element or the H-PCF network element.
Step 2. The second session management network element generates the second VPLMN roaming offloading information based on the second VPLMN roaming offloading policy. Optionally, the second session management network element may further generate the identifier of the second VPLMN roaming offloading information.
Step 3. The second session management network element sends a session creation response for the second session to the first session management network element, where the session creation response includes the generated second VPLMN roaming offloading information. Optionally, the session creation response may further include the identifier of the generated second VPLMN roaming offloading information.

S304. The first session management network element receives the second VPLMN roaming offloading information from the second session management network element and stores the second VPLMN roaming offloading information, where the second VPLMN roaming offloading information is used to configure an EASDF network element and/or configure an offloading rule of an offloading point for a subsequently created first-type session. The subsequently created first-type session includes the second session.

It should be understood that the second VPLMN roaming offloading information may be the same as or different from the first VPLMN roaming offloading information. When the second VPLMN roaming offloading information is different from the first VPLMN roaming offloading information, step S301 may be performed to prevent the first session management network element from configuring an EASDF network element and/or configuring an offloading rule of an offloading point for the second session by using the first VPLMN roaming offloading information, so that the UE can be prevented from failing to access a VPLMN, thereby improving communication efficiency.

Optionally, the first session management network element may further receive the identifier of the second VPLMN roaming offloading information from the second session management network element and store the identifier of the second VPLMN roaming offloading information.

Optionally, the first session management network element may configure an EASDF network element for the subsequently created first-type session based on the second VPLMN roaming offloading information, and a terminal device of the second session may process a service based on the configured EASDF network element. With reference to FIG. 2, for example, based on the foregoing configured EASDF network element, the terminal device of the second session may process a service through the path 1 or the path 2. In the path 1, the terminal device of the second session may access the VPLMN, and send, to the L-DN in the VPLMN for processing, some services that allow local traffic routing. In the path 2, the terminal device of the second session may send, to the DN in the HPLMN for processing, a service that does not allow local traffic routing.

In a conventional technical solution, after all sessions in the first-type session are released and in a period of time before a subsequent session creation procedure, if signaling corresponding to the first-type session is not transmitted between the home SMF network element and the visited SMF network element of the session, the VPLMN roaming offloading information cannot be updated. Therefore, once the home SMF network element is updated in the foregoing period of time, the VPLMN roaming offloading information stored in the visited SMF network element becomes wrong VPLMN roaming offloading information.

According to this method, in the session release procedure or the session relocation procedure of the first session, the first session management network element may determine that the first-type session includes only the first session and delete the stored first VPLMN roaming offloading information, and in a session creation procedure of a subsequently created session, the first session management network element may obtain latest VPLMN roaming offloading information used to configure an EASDF network element for the first-type session, so that a probability that the first session management network element configures an EASDF network element by using wrong VPLMN roaming offloading information is reduced, thereby improving communication efficiency.

In a possible design, for example, the first session is an HR-SBO session of the UE. In this case, in the foregoing step S301 to step S304, the first session management network element is a visited SMF network element serving the first session, and the second session management network element is a home SMF network element serving the first session. A manner of triggering the session release procedure of the first session includes a manner A, a manner B, and a manner C.

Manner A. The UE triggers the session release procedure of the first session.

Manner B. The visited SMF network element serving the first session triggers the session release procedure of the first session.

Manner C. The home SMF network element serving the first session triggers the session release procedure of the first session.

In the manner C, the home SMF network element serving the first session may send a session update message or a session release request to the visited SMF network element serving the first session, where the session update message carries a session release indication. Correspondingly, the visited SMF network element serving the first session may receive the session update message or the session release request from the home SMF network element serving the first session.

When the first session management network element does not store the first VPLMN roaming offloading information, the first session management network element may obtain, in a subsequent session creation procedure or session relocation procedure of a session that belongs to the first-type session, latest VPLMN roaming offloading information that is stored in a home SMF network element of the session (for example, a session i) and that is used to configure an EASDF network element for the first-type session. The session that belongs to the first-type session may be the first session, or may be another session. This is not limited in this application.

When the first session management network element stores VPLMN roaming offloading information, the first session management network element may alternatively obtain, in a session modification procedure of an existing session or a subsequent session creation procedure or session management procedure of a session that belongs to the first-type session, latest VPLMN roaming offloading information that is stored in a home SMF network element of the session (for example, a session j) and that is used to configure an EASDF network element for the first-type session. That is, when the VPLMN roaming offloading information stored in the first session management network element is not latest, the first session management network element may obtain the latest VPLMN roaming offloading information from the home SMF network element of the session j, to determine the first VPLMN roaming offloading information. The session that belongs to the first-type session may be the first session, or may be another session. This is not limited in this application.

The following uses an example in which the foregoing session is the first session to provide a possible design, to obtain the first VPLMN roaming offloading information.

In a possible design, before the release procedure of the first session, the first session management network element may obtain the first VPLMN roaming offloading information through a session management procedure (for example, a session creation procedure, a session update procedure, or a session relocation procedure) of the first session. This design may be implemented in the HR roaming scenario shown in FIG. 1 or FIG. 2. For example, the session management procedure is a session creation procedure, and the home SMF network element serving the first session is a third session management network element. The session creation procedure includes the following steps.

Step 1. After receiving a session creation request for the first session, the third session management network element obtains a first VPLMN specific offloading policy (specific offloading policy) (VPLMN roaming offloading policy for short below) from a UDM network element or an H-PCF network element in an HPLMN. The session creation request is used to request to perform VPLMN roaming offloading processing for the first session.

In embodiments of this application, the VPLMN roaming offloading policy includes at least one of the following: at least one fully qualified domain name (fully qualified domain name, FQDN) (or referred to as one or more FQDNs), an IP address of at least one EASDF network element (or referred to as one or more EASDF IPs), or information about a service that is authorized by the HPLMN and that is allowed to be offloaded in a VPLMN. Details are not described in subsequent embodiments.

Optionally, the session creation request includes session allowed indication information (for example, HR-SBO allowed indication information (HR-SBO allowed indication)), and the session allowed indication information indicates that a session corresponding to the session creation request is allowed to access an EASDF network element through the VPLMN. For session allowed indication information that subsequently appears in this application, refer to the descriptions herein. Details are not described again below.

Optionally, the session creation request does not include the identifier of the first VPLMN roaming offloading information.

Optionally, before step 1 is performed, the terminal device of the first session may send a non-access stratum (non-access stratum, NAS) message to an AMF network element, where the NAS message carries a session establishment request; the AMF network element determines the session allowed indication information based on subscription information between an operator corresponding to the HPLMN and an operator corresponding to the VPLMN; and the AMF network element sends the session allowed indication information to the first session management network element. Correspondingly, the first session management network element may send the session creation request for the first session to the third session management network element based on the session allowed indication information.

Step 2. The third session management network element generates the first VPLMN roaming offloading information based on the first VPLMN roaming offloading policy.

In embodiments of this application, the VPLMN roaming offloading information includes at least one of the following: the one or more FQDNs, the one or more EASDF IPs, or the information about the service that is authorized by the HPLMN and that is allowed to be offloaded in the VPLMN. Details are not described in subsequent embodiments.

Step 3. The third session management network element sends a session creation response for the first session to the first session management network element, where the session creation response includes the generated first VPLMN roaming offloading information. Correspondingly, the first session management network element receives the first VPLMN roaming offloading information from the third session management network element and stores the first VPLMN roaming offloading information. Optionally, the session creation response includes an IP address of the UE. Optionally, the session creation response includes the identifier of the first VPLMN roaming offloading information.

Step 4. The first session management network element may configure an EASDF network element based on the stored first VPLMN roaming offloading information, where the EASDF network element is configured to assist the first session management network element in configuring an offloading rule of an offloading point (for example, an uplink classifier/branching point (uplink classifier/branching point, ULCL/BP)), and/or the first session management network element may directly configure an EASDF network element and configure an offloading rule of an offloading point based on the stored first VPLMN roaming offloading information.

Optionally, when performing step 4, the first session management network element may further perform another step. This is not limited in this application. For example, the first session management network element may further select, based on the EASDF network element, an EAS deployed in a VPLMN edge hosting environment.

In a possible design, for example, the first session is an HR-SBO session, and the configured EASDF network element is a visited EASDF network element. Before the EASDF network element assists in configuring an offloading rule of an offloading point in step 4, the step of selecting the EAS includes:
Step a. The first session management network element delivers a DNS message handling rule (DNS handling rule) to the visited EASDF network element based on the first VPLMN roaming offloading information. The DNS message handling rule indicates the visited EASDF network element to process a DNS request received from the UE, and the DNS request includes one of a session creation request, a session modification request, a session relocation request, and a session release request. A source address of the DNS request sent by the UE is the IP address of the UE, and a destination address is an IP address of the visited EASDF network element.
Step b. When an FQDN included in the DNS request is any one of a plurality of authorized FQDNs (one or more authorized FQDNs), the visited EASDF network element sends a report message to the first session management network element, where the report message carries the FQDN.
Step c. The first session management network element determines, based on one or more of the FQDN, EAS deployment information (including information such as the FQDN and a data network access identifier (data network access identifier, DNAI)), a location of the UE, and the like, option information to configure EASDF network element (for example, information to build ECS option); and the first session management network element sends the option information to configure EASDF network element to the visited EASDF network element.
Step d. The visited EASDF network element adds an ECS option (ECS option) to the DNS request based on the option information to configure EASDF network element, and sends a processed DNS request to a DNS server (DNS server). A source address of the DNS request is the IP address of the visited EASDF network element, and a destination address is an IP address of the DNS server.
Step e. The visited EASDF network element receives a DNS response (DNS response) returned by the DNS server, where the DNS response carries an IP address of an EAS corresponding to a pre-ECS option, and the pre-ECS option is one or more options in the ECS option. A source address of the DNS response is the IP address of the DNS server, and a destination address is the IP address of the visited EASDF network element.
Step f. The visited EASDF network element reports, to the first session management network element, the IP address of the EAS carried in the DNS response, to trigger the first session management network element to insert/update a ULCL/BP. The first session management network element may further update a local PSA (local PSA).
Step g. The first session management network element sends an indication to the visited EASDF network element, where the indication indicates to send, to the UE, the DNS response that carries the IP address of the EAS.
Step h. The visited EASDF network element sends the DNS response to the UE, where the DNS response carries the IP address of the EAS. A source address of the DNS response is the IP address of the visited EASDF network element, and a destination address is the IP address of the UE. Correspondingly, the UE obtains the IP address of the EAS. That is, the first session management network element completes EAS selection.

In a possible design, before the release procedure of the first session, for example, the home SMF network element serving the first session is the third session management network element, the session management procedure of the first session includes the following steps.

Step A. The first session management network element sends a session management request to the third session management network element in the session management procedure of the first session. The session management request includes first verification information, and the first verification information is obtained based on the first VPLMN roaming offloading information stored in the first session management network element.

Step B. The third session management network element determines second verification information based on stored third VPLMN roaming offloading information; and after receiving the session management request, the third session management network element verifies, based on the first verification information and the second verification information, whether the first VPLMN roaming offloading information is the same as the third VPLMN roaming offloading information. The third VPLMN roaming offloading information is latest VPLMN roaming offloading information that is stored in the third session management network element and that is used to configure an EASDF network element for the first-type session.

Step C. The third session management network element sends a session management response to the first session management network element. If a verification result is "same", the session management response does not include the third VPLMN roaming offloading information; or if the verification result is "different", the session management response includes the third VPLMN roaming offloading information. Correspondingly, if the session management response includes the third VPLMN roaming offloading information, the first session management network element may replace the stored first VPLMN roaming offloading information with the third VPLMN roaming offloading information, and the first VPLMN roaming offloading information described in subsequent steps should also be replaced with the third VPLMN roaming offloading information.

The session management procedure provided in this application includes but is not limited to a session creation procedure, a session update procedure, and a session relocation procedure. The following provides brief descriptions based on the foregoing three cases.

When the session management procedure is a session creation procedure, the session management request is a session creation request, and the session management response is a session creation response.

When the session management procedure is a session update procedure, the session management request is a session update request, and the session management response is a session update response.

When the session management procedure is a session relocation procedure, the session management request is a session relocation request, and the session management response is a session relocation response. It should be understood that, in this case, the session relocation request may be initiated by a target visited SMF network element of a session, and the session relocation response may be initiated by a source visited SMF network element of the session.

It should be understood that the descriptions of the three cases herein are applicable to all embodiments of this application, and details are not described below.

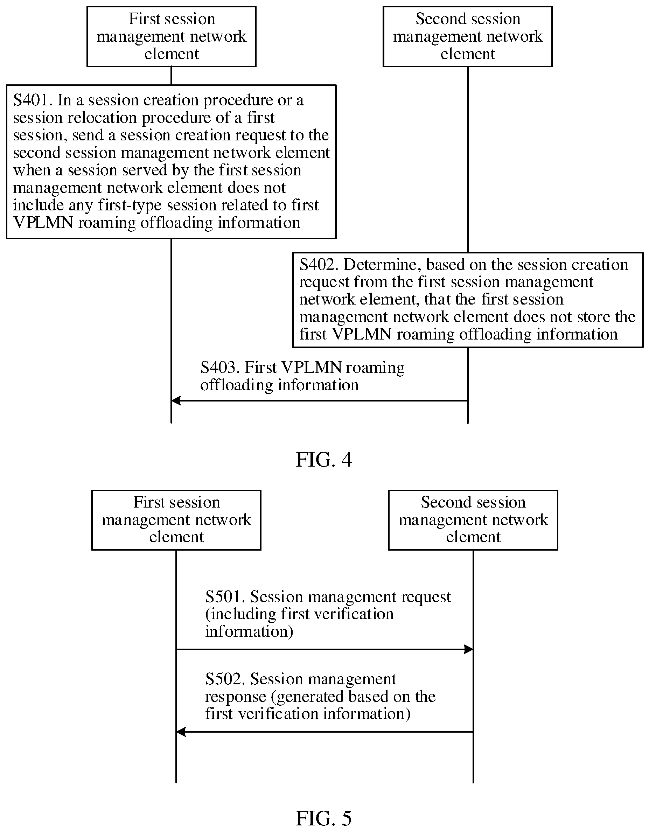

As shown in FIG. 4, an embodiment of this application provides another communication method. The communication method may be implemented in the HR roaming scenario shown in FIG. 1 or FIG. 2. The method includes the following steps.

S401. In a session creation procedure or a session relocation procedure of a first session, the first session management network element sends a session creation request to a second session management network element when a session served by a first session management network element does not include any first-type session related to first VPLMN roaming offloading information.

The session creation request indicates that the first session management network element does not store the first VPLMN roaming offloading information. The first session is a home session offloading session, the first session is related to the first VPLMN roaming offloading information, and the first VPLMN roaming offloading information is used to configure an EASDF network element and/or an offloading rule of an offloading point for the first-type session.

Optionally, the first session management network element is a visited SMF network element serving the first session, and the second session management network element is a home SMF network element serving the first session.

Optionally, the home session offloading session may be an HR-SBO session, or is a session served by two SMFs that have different service areas, or the like.

Optionally, for the session relocation procedure of the first session, refer to the example for describing the session relocation procedure in step S301. In this embodiment, the first session management network element may be a source visited SMF network element of the first session.

Still refer to the example of the session relocation procedure in step S301. Before serving the session A, the V-SMF 2 (that is, the source visited SMF network element) does not serve any session of a first type (that is, the first-type session). After the V-SMF 2 receives session context from the V-SMF 1 (that is, the target visited SMF network element) and starts to serve the session A, the session A is also a first HR-SBO session of the V-SMF 2. In addition, the V-SMF 2 also obtains VPLMN roaming offloading information and an identifier of the VPLMN roaming offloading information from the session context from the V-SMF 1. In this scenario, although the V-SMF 2 as the source visited SMF network element does not perform a session creation procedure, a same effect is achieved. This scenario is also protected in the solutions of this application.

The following uses an example to describe a manner in which the session creation request indicates that the first VPLMN roaming offloading information is not stored. It is assumed that the visited SMF network element of the first session is a V-SMF network element, and the home SMF network element of the first session is an H-SMF network element. For example, if a session creation request message (for example, nsmf_PDU session_create request) sent by the V-SMF to the H-SMF does not include an identifier of any VPLMN roaming offloading information, the message indicates that the first session management network element does not store the first VPLMN roaming offloading information. For another example, a session creation request message (for example, nsmf_PDU session_create request) sent by the V-SMF to the H-SMF carries indication information, indicating that the first session management network element does not store the first VPLMN roaming offloading information.

Optionally, the session creation request includes session allowed indication information and does not include an identifier of the first VPLMN roaming offloading information, and the session allowed indication information indicates that a session corresponding to the session creation request is allowed to access an EASDF network element through a VPLMN.

Optionally, the first-type session related to the first VPLMN roaming offloading information has a same characteristic, and the same characteristic includes at least one of the following: a DNN, S-NSSAI, an HPLMN, an HR-SBO session type, or a home SMF network element that provides a service. For the "same characteristic" mentioned herein, refer to the descriptions of the "same characteristic" in step S301. Details are not described herein again.

In a possible design, the first session management network element determines, in the following manner 1 or manner 2, that the served session does not include any first-type session.

Manner 1. The first session management network element sends the session creation request to the second session management network element when a session context information set stored in the first session management network element does not include session context information of any first-type session.

Optionally, the first session management network element updates the session context information set in the session creation procedure or the session relocation procedure of the first session, where the session context information set includes session context information of the first session, and the session context information set is used to store the session context information of the first-type session.

Manner 2. The first session management network element sends the session creation request to the second session management network element when the first session management network element does not store a mapping relationship between the identifier of the first VPLMN roaming offloading information and session information of the first-type session. The session information may be a session identifier of a session or session context information of a session.

S402. In the session creation procedure or the session relocation procedure of the first session, the second session management network element determines, based on the session creation request from the first session management network element, that the first session management network element does not store the first VPLMN roaming offloading information.

Optionally, when the session creation request does not include the identifier of the first VPLMN roaming offloading information, the second session management network element determines that the first session management network element does not store the first VPLMN roaming offloading information.

S403. The second session management network element sends the first VPLMN roaming offloading information to the first session management network element, and the first session management network element receives the first VPLMN roaming offloading information from the second session management network element and stores the first VPLMN roaming offloading information, where the first VPLMN roaming offloading information is used to configure an EASDF network element and/or an offloading rule of an offloading point for the first-type session.

Optionally, the first session management network element may further receive the identifier of the first VPLMN roaming offloading information from the second session management network element and store the identifier of the first VPLMN roaming offloading information.

Optionally, when the foregoing manner 2 is used, after step S402 is performed, the first session management network element may further establish the mapping relationship between the identifier of the first VPLMN roaming offloading information and the session information of the first-type session, where the mapping relationship includes session information of the first session.

In a possible design, after step S403, the first session management network element and the second session management network element may further perform a session management procedure of the first session. Optionally, the session management procedure of the first session includes a session update procedure and a session relocation procedure. For the session management procedure of the first session, refer to the descriptions of the session management procedure in the foregoing step A to step C. Details are not described herein again.

In a possible design, before the session creation procedure or the session relocation procedure of the first session, the first session management network element may further perform a session release procedure of a second session. For the session release procedure of the second session, refer to the session release procedure of the first session in step S301. Details are not described herein again.

According to this method, in the session creation procedure or the session relocation procedure of the first session, the first session management network element may determine that the session served by the first session management network element does not include any first-type session, and send, to the second session management network element, the session creation request indicating that the first VPLMN roaming offloading information is not stored, to receive latest VPLMN roaming offloading information from the second session management network element and store the latest VPLMN roaming offloading information, that is, the first VPLMN roaming offloading information, so that a probability that the first session management network element configures an EASDF network element by using wrong VPLMN roaming offloading information can be reduced, thereby improving communication efficiency.

As shown in FIG. 5, an embodiment of this application provides another communication method. The method is applied to a first session management network element and/or a second session management network element, and the method includes the following steps.

S501. The first session management network element sends a session management request to the second session management network element in a session management procedure of a first session; and correspondingly, the second session management network element receives the session management request from the first session management network element. The session management request includes first verification information, and the first verification information is obtained based on stored first VPLMN roaming offloading information. The first session is a home session offloading session.

Optionally, the first session management network element is a visited SMF network element serving the first session, and the second session management network element is a home SMF network element serving the first session.

Optionally, the session management procedure of the first session includes a session creation procedure, a session update procedure, and a session relocation procedure.

Optionally, the home session offloading session may be an HR-SBO session, or is a session served by two SMFs that have different service areas, or the like.

Optionally, the session management request includes session allowed indication information and/or an identifier of the first VPLMN roaming offloading information, and the session allowed indication information indicates that a session corresponding to the session creation request is allowed to access an EASDF network element through a VPLMN.

Optionally, before step S501 is performed, the first session management network element may perform hash calculation on the first VPLMN roaming offloading information, to obtain the first verification information.

In a possible design, before step S501 is performed, in a session management procedure of a second session, the first session management network element receives the first VPLMN roaming offloading information from a third session management network element and stores the first VPLMN roaming offloading information, where the second session is a home session offloading session, the second session is related to the first VPLMN roaming offloading information, and the third session management network element is a home SMF network element serving the second session. Optionally, the session management procedure of the second session includes a session creation procedure, a session update procedure, and a session relocation procedure.

S502. The second session management network element sends a session management response to the first session management network element based on the first verification information; and correspondingly, the first session management network element receives the session management response from the second session management network element. The session management response indicates whether to configure an EASDF network element and/or configure an offloading rule of an offloading point for the first session by using the first VPLMN roaming offloading information.

Optionally, when the session management response includes second VPLMN roaming offloading information, the first session management network element deletes the first VPLMN roaming offloading information, and stores the second VPLMN roaming offloading information, where the second VPLMN roaming offloading information is used to configure an EASDF network element for the first-type session. The first session is related to the first VPLMN roaming offloading information.

Optionally, the first-type session related to the first VPLMN roaming offloading information has a same characteristic, and the same characteristic includes at least one of the following: a DNN, S-NSSAI, an HPLMN, an HR-SBO session type, a visited SMF network element that provides a service, or a home SMF network element that provides a service. For example, sessions of a same home SMF network element and a same visited SMF network element have a same characteristic. In other words, the first-type session is a type of HR-SBO session served by a same visited SMF network element and a same home SMF network element. For another example, sessions with a same DNN and/or same S-NSSAI have a same characteristic. In other words, the first-type session is an HR-SBO session corresponding to a same DNN and/or same S-NSSAI.

In a possible design, that the second session management network element sends the session management response to the first session management network element based on the first verification information includes the following steps.

Step (1). The second session management network element obtains second verification information, where the second verification information is determined based on the stored second VPLMN roaming offloading information, and the second VPLMN roaming offloading information is used to configure an EASDF network element for the first-type session.

Optionally, when the first verification information is obtained by the first session management network element by performing hash calculation based on the first VPLMN roaming offloading information, when the second session management network element determines the second VPLMN roaming offloading information for the first time, the second session management network element performs hash calculation on the second VPLMN roaming offloading information, to obtain the second verification information. Correspondingly, the second session management network element may store the second verification information.

Step (2). Send a first session management response to the first session management network element when the first verification information is the same as the second verification information, where the first session management response does not include the second VPLMN roaming offloading information. The first session management response indicates to configure an EASDF network element and/or configure an offloading rule of an offloading point for the first session by using the first VPLMN roaming offloading information.

Optionally, the first session management response includes an identifier of the second VPLMN roaming offloading information.

Step (3). Send a second session management response to the first session management network element when the first verification information is different from the second verification information, where the second session management response includes the second VPLMN roaming offloading information. The second session management response indicates not to configure an EASDF network element and/or configure an offloading rule of an offloading point for the first session by using the first VPLMN roaming offloading information.

Optionally, in this case, the second session management response may further include an identifier of the second VPLMN roaming offloading information.

It should be understood that, either step (2) or step (3) may be performed based on a verification result.

Based on the foregoing design, that the second session management network element sends the session management response to the first session management network element based on the first verification information includes the following steps.

Step (a). The second session management network element determines the second verification information based on the stored second VPLMN roaming offloading information, where the second VPLMN roaming offloading information is used to configure an EASDF network element for the first-type session.

Step (b). The second session management network element obtains stored first status information, where the first status information indicates whether the second VPLMN roaming offloading information has been sent to the first session management network element.

Step (c). Send the first session management response to the first session management network element when the first verification information is the same as the second verification information and the first status information indicates that the second VPLMN roaming offloading information has been sent to the first session management network element, where the first session management response does not include the second VPLMN roaming offloading information. The first session management response indicates to configure an EASDF network element and/or configure an offloading rule of an offloading point for the first session by using the first VPLMN roaming offloading information.

Step (d). Send the second session management response to the first session management network element when the first verification information is different from the second verification information or the first status information indicates that the second VPLMN roaming offloading information has never been sent to the first session management network element, where the second session management response includes the second VPLMN roaming offloading information. The first session management response indicates not to configure an EASDF network element and/or configure an offloading rule of an offloading point for the first session by using the first VPLMN roaming offloading information.

It should be understood that, either step (c) or step (d) may be performed based on a verification result. In other words, the session management response in step S502 may be the first session management response or the second session management response.

In a possible design, when the session management procedure of the first session is a session creation procedure or a session relocation procedure of the first session, the session creation request further indicates that the first session management network element does not store VPLMN roaming offloading information. Correspondingly, the second session management network element may send the second VPLMN roaming offloading information to the first session management network element based on the session creation request. For an indication manner of the session creation request, refer to the foregoing design 1 and design 2. Details are not described herein again.

In a possible design, when the session management procedure of the first session is a session creation procedure or a session relocation procedure of the first session, and a session served by the second session management network element does not include any first-type session, the session management response includes the second VPLMN roaming offloading information.

In a possible design, before the session management procedure of the first session, the first session management network element may further perform a session release procedure or a session relocation procedure of a third session. For the session release procedure or the session relocation procedure of the third session, refer to the session release procedure of the first session in step S301. Details are not described herein again.

In a possible design, before the session management procedure of the first session, the second session management network element may further perform a session release procedure or a session relocation procedure of a fourth session. When the first-type session includes only the fourth session, the second session management network element may further record second status information, where the second status information indicates the second session management network element to send the second VPLMN roaming offloading information to the first session management network element in the session creation procedure of the subsequently created first session.

According to this method, the first verification information is obtained based on the first VPLMN roaming offloading information stored in the first session management network element, the second session management network element may determine, based on the first verification information sent by the first session management network element, whether the first VPLMN roaming offloading information stored in the first session management network element is the same as latest VPLMN roaming offloading information stored in the second session management network element, and indicate, through the session management response, whether to configure an EASDF network element for the first-type session by using the first VPLMN roaming offloading information, so that a probability that the first session management network element configures an EASDF network element by using wrong VPLMN roaming offloading information can be reduced, thereby improving communication efficiency.

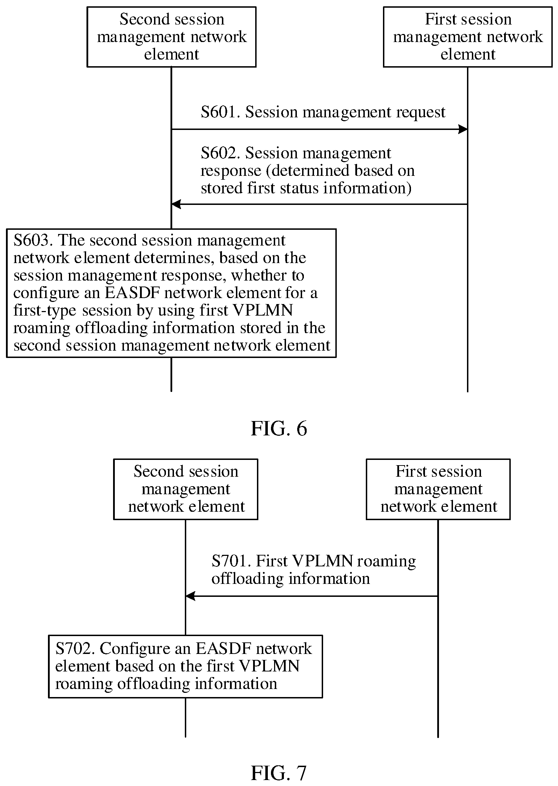

As shown in FIG. 6, an embodiment of this application provides another communication method. The method is applied to a first session management network element, and the method includes the following steps.

S601. The first session management network element receives a session management request from a second session management network element in a session management procedure of a first session. The first session is a home session offloading session.

Optionally, the first session management network element is a home SMF network element serving the first session, and the second session management network element is a visited SMF network element serving the first session.

Optionally, the session management procedure of the first session includes a session creation procedure, a session update procedure, and a session relocation procedure.

Optionally, the home session offloading session may be an HR-SBO session, or is a session served by two SMFs that have different service areas, or the like.

Optionally, a session creation request includes session allowed indication information and/or an identifier of first VPLMN roaming offloading information, and the session allowed indication information indicates that a session corresponding to the session creation request is allowed to access an EASDF network element through a VPLMN.

S602. The first session management network element sends a session management response to the second session management network element based on stored first status information, where the session management response indicates whether to configure an EASDF network element and/or configure an offloading rule of an offloading point for the first session by using the first VPLMN roaming offloading information stored in the second session management network element. The first status information indicates whether second VPLMN roaming offloading information has been sent to the second session management network element, and the second VPLMN roaming offloading information is latest VPLMN roaming offloading information that is stored in the first session management network element and that is used to configure an EASDF network element and/or configure an offloading rule of an offloading point for the first-type session. The first session is related to the first VPLMN roaming offloading information.

Optionally, the first-type session related to the first VPLMN roaming offloading information has a same characteristic, and the same characteristic includes at least one of the following: a DNN, S-NSSAI, an HPLMN, an HR-SBO session type, or a visited SMF network element that provides a service. For example, sessions of a same visited SMF network element have a same characteristic. In other words, the first-type session is a type of HR-SBO session served by a same visited SMF network element. For another example, sessions with a same DNN and/or same S-NSSAI have a same characteristic. In other words, the first-type session is an HR-SBO session corresponding to a same DNN and/or same S-NSSAI.

Optionally, the first status information is represented by a flag (flag), and a value of the flag is 0 or 1. The value 0 indicates that the second VPLMN roaming offloading information and an identifier of the second VPLMN roaming offloading information have never been sent to the second session management network element; and the value 1 indicates that the second VPLMN roaming offloading information and the identifier of the second VPLMN roaming offloading information have been sent to the second session management network element.

It is assumed that home SMF network elements that serve a session a and a session b are an H-SMF, a visited SMF network element serving the session a is a V-SMF a, and a visited SMF network element serving the session b is a V-SMF b. For example, for the V-SMF a, the first status information recorded by the H-SMF is flag=1. In other words, the H-SMF has sent the second VPLMN roaming offloading information and the identifier of the second VPLMN roaming offloading information to the V-SMF a.

For another example, for the V-SMF b, the first status information recorded by the H-SMF is flag=0. In other words, the H-SMF has never sent the second VPLMN roaming offloading information and the identifier of the second VPLMN roaming offloading information to the V-SMF a.

In a possible design, based on different stored first status information, content of the session management response is discussed in the following two cases.

Case 1. When the first status information indicates that the second VPLMN roaming offloading information has never been sent to the second session management network element, the session management response includes the second VPLMN roaming offloading information. In this case, the session management response indicates not to configure an EASDF network element and/or configure an offloading rule of an offloading point for the first session by using the first VPLMN roaming offloading information stored in the second session management network element.

Optionally, the session management response further includes the identifier of the second VPLMN roaming offloading information.

Case 2. When the first status information indicates that the second VPLMN roaming offloading information has been sent to the second session management network element, the session management response does not include the second VPLMN roaming offloading information. In this case, the session management response indicates to configure an EASDF network element and/or configure an offloading rule of an offloading point for the first session by using the first VPLMN roaming offloading information stored in the second session management network element.

Optionally, the session management response includes the identifier of the first VPLMN roaming offloading information.

In a possible design, when the session management procedure of the first session is a session creation procedure or a session relocation procedure of the first session, based on different stored first status information, content of the session management response is discussed in the following two cases.

Case A. When the first status information indicates that the second VPLMN roaming offloading information has never been sent to the second session management network element, or a session served by the second session management network element does not include any first-type session, the session management response includes the second VPLMN roaming offloading information.

Case B. When the first status information indicates that the second VPLMN roaming offloading information has been sent to the second session management network element, and a session served by the second session management network element includes the first-type session, the session management response does not include the second VPLMN roaming offloading information.

Optionally, when it is determined, based on the first status information, that the content of the session management response belongs to the case 1 or the case A, after step S602 is performed, the first session management network element may further modify the first status information, so that the first status information indicates that the second VPLMN roaming offloading information has been sent to the second session management network element.

S603. The second session management network element determines, based on the session management response from the first session management network element, whether to configure an EASDF network element and/or configure an offloading rule of an offloading point for the first-type session by using the first VPLMN roaming offloading information stored in the second session management network element.

Optionally, when the session management response includes the second VPLMN roaming offloading information, the second session management network element configures an EASDF network element for the first-type session based on the received second VPLMN roaming offloading information. When the session management response does not include the second VPLMN roaming offloading information, the second session management network element configures an EASDF network element for the first-type session based on the stored first VPLMN roaming offloading information.

In a possible design, before the session management procedure of the first session, the first session management network element may further perform a session release procedure or a session relocation procedure of a second session. When the first-type session includes only the second session, the first session management network element may further record the first status information, where the first status information indicates the first session management network element to send the second VPLMN roaming offloading information to the second session management network element in the session creation procedure of the subsequently created first session.

According to this method, the first session management network element may determine, based on whether the second VPLMN roaming offloading information has been sent to the second session management network element, to send the session management response to the second session management network element. The session management response may indicate whether to configure an EASDF network element for the first-type session by using the first VPLMN roaming offloading information stored in the second session management network element. Therefore, an EASDF network element can be prevented from being configured when latest VPLMN roaming offloading information has never been sent to the second session management network element, so that a probability that the second session management network element configures an EASDF network element by using wrong VPLMN roaming offloading information can be reduced, thereby improving communication efficiency.

As shown in FIG. 7, an embodiment of this application provides another communication method. The method is applied to a first session management network element, and the method includes the following steps.

S701. In a session creation procedure or a session relocation procedure of a first session, when a session served by the first session management network element does not include any first-type session related to first VPLMN roaming offloading information, the first session management network element sends the first VPLMN roaming offloading information to a second session management network element, where the first VPLMN roaming offloading information is used to configure an EASDF network element and/or configure an offloading rule of an offloading point for the first-type session. Correspondingly, the second session management network element receives the first VPLMN roaming offloading information from the first session management network element and stores the first VPLMN roaming offloading information.

The first session is a home session offloading session, and the first session is related to the first VPLMN roaming offloading information.

Optionally, the first session management network element is a home SMF network element serving the first session, and the second session management network element is a visited SMF network element serving the first session.

Optionally, the home session offloading session may be an HR-SBO session, or is a session served by two SMFs that have different service areas, or the like.

Optionally, for the session relocation procedure of the first session, refer to the example for describing the session relocation procedure in step S401. In this embodiment, the first session management network element may be a source visited SMF network element of the first session. It should be understood that, in the session relocation procedure in this embodiment of this application, a session creation request may be a request for relocating a session. For example, in this embodiment, the session creation request may be a request for relocating the first session.

Optionally, the session creation request includes session allowed indication information and does not include an identifier of the first VPLMN roaming offloading information, and the session allowed indication information indicates that a session corresponding to the session creation request is allowed to access an EASDF network element through a VPLMN.

Optionally, the first-type session related to the first VPLMN roaming offloading information has a same characteristic, and the same characteristic includes at least one of the following: a DNN, S-NSSAI, an HPLMN, an HR-SBO session type, or a visited SMF network element that provides a service. For the "same characteristic" mentioned herein, refer to the descriptions of the "same characteristic" in step S602. Details are not described herein again.

Optionally, when the session served by the first session management network element does not include any first-type session related to the first VPLMN roaming offloading information, the first session management network element may further send the identifier of the first VPLMN roaming offloading information to the second session management network element.

In a possible design, the first session management network element determines, in the following manner a or manner b, that the served session does not include any first-type session.

Manner a. The first session management network element sends the first VPLMN roaming offloading information to the second session management network element when a session context information set stored in the first session management network element does not include session context information of any first-type session.

Optionally, the first session management network element updates the session context information set in the session creation procedure or the session relocation procedure of the first session, where the session context information set includes session context information of the first session, and the session context information set is used to store the session context information of the first-type session.

Manner b. The first session management network element sends the first VPLMN roaming offloading information to the second session management network element when the first session management network element does not store a mapping relationship between the identifier of the first VPLMN roaming offloading information and session information of the first-type session. The session information may be a session identifier of a session or session context information of a session.

Optionally, when the foregoing manner b is used, after step S701 is performed, the first session management network element may further establish the mapping relationship between the identifier of the first VPLMN roaming offloading information and the session information of the first-type session, where the mapping relationship includes session information of the first session.

S702. The second session management network element configures an EASDF network element based on the first VPLMN roaming offloading information, to configure a ULCL/BP; and/or the second session management network element configures an offloading rule of an offloading point based on the first VPLMN roaming offloading information.

In a possible design, in a session management procedure of the first session after step S702, the first session management network element sends a session management response to the second session management network element based on stored first status information, where the session management response indicates whether to configure an EASDF network element for the first-type session by using the first VPLMN roaming offloading information stored in the second session management network element. For a method for determining the session management response, refer to the descriptions in step S602. Details are not described herein again. Optionally, in this design, the session management procedure of the first session includes a session creation procedure, a session update procedure, and a session relocation procedure.

In a possible design, before the session creation procedure or the session relocation procedure of the first session, the first session management network element may further perform a session release procedure of a second session. When the first-type session includes only the second session, the first session management network element may further record the first status information, where the first status information indicates the first session management network element to send the first VPLMN roaming offloading information to the second session management network element in the session creation procedure or the session relocation procedure of the subsequently created first session.

According to this method, in the session creation procedure or the session relocation procedure of the first session, when the served session does not include any first-type session, the first session management network element may send, to the second session management network element, latest VPLMN roaming offloading information stored in the first session management network element, that is, the first VPLMN roaming offloading information, so that a probability that the second session management network element configures an EASDF network element by using wrong VPLMN roaming offloading information can be reduced, thereby improving communication efficiency.

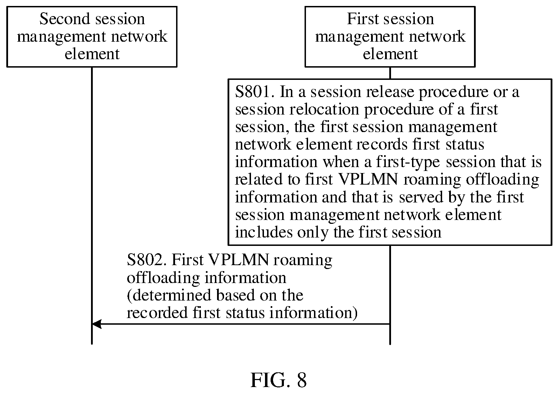

As shown in FIG. 8, an embodiment of this application provides another communication method. The method is applied to a first session management network element, and the method includes the following steps.

S801. In a session release procedure or a session relocation procedure of a first session, the first session management network element records first status information when a first-type session that is related to first VPLMN roaming offloading information and that is served by the first session management network element includes only the first session.

The first session is a home session offloading session, the first session is related to first VPLMN roaming offloading information, the first status information indicates to send VPLMN roaming offloading information to a second session management network element in a session creation procedure or a session relocation procedure of a subsequently created second session, the second session is a home session offloading session, the second session is related to the first VPLMN roaming offloading information, and the first VPLMN roaming offloading information is used to configure an EASDF network element and/or configure an offloading rule of an offloading point for the first-type session.

Optionally, the home session offloading session may be an HR-SBO session, or is a session served by two SMFs that have different service areas, or the like.

Optionally, the first status information further indicates to send an identifier of the first VPLMN roaming offloading information to the second session management network element in the session creation procedure or the session relocation procedure of the subsequently created second session.

Optionally, the first session management network element is a home SMF network element serving the second session, and the second session management network element is a visited SMF network element serving the second session.

It should be understood that for a manner of triggering the session release procedure of the first session, refer to the foregoing manner A, manner B, and manner C. In the manner C, a home SMF network element of the first session may send a session update message or a session release request to a visited SMF network element of the first session, where the session update message carries a session release indication.

Optionally, the first-type session related to the first VPLMN roaming offloading information has a same characteristic, and the same characteristic includes at least one of the following: a DNN, S-NSSAI, an HPLMN, an HR-SBO session type, or a visited SMF network element that provides a service. For the "same characteristic" mentioned herein, refer to the descriptions of the "same characteristic" in step S602. Details are not described herein again.

Optionally, for the session relocation procedure of the first session, refer to the example for describing the session relocation procedure in step S301. In this embodiment, the first session management network element may be a target visited SMF network element of the first session.

In a possible design, the first session management network element determines, in the following manner (1) and manner (2), that the first-type session includes only the first session.

Manner (1). The first session management network element records the first status information when a session context information set stored in the first session management network element includes only session context information of the first session, where the session context information set is used to store session context information of the first-type session.

Optionally, the first session management network element deletes, in the session release procedure or the session relocation procedure of the first session, the session context information of the first session that is stored in the session context information set. Optionally, the session context information set is deleted in the session release procedure or the session relocation procedure of the first session.

Manner (2). The first session management network element records the first status information when a mapping relationship that is stored in the first session management network element and that is between the identifier of the first VPLMN roaming offloading information and session information of the first-type session includes only session information of the first session. The session information may be a session identifier of a session or session context information of a session.

Optionally, the first session management network element deletes the session information of the first session in the session release procedure or the session relocation procedure of the first session.

S802. In the session creation procedure or the session relocation procedure of the second session, the first session management network element sends the first VPLMN roaming offloading information to the second session management network element based on the recorded first status information.

The second session is a home session offloading session, the second session belongs to the first-type session, the second session management network element is a visited SMF network element serving the second session, and the first VPLMN roaming offloading information is used to configure an EASDF network element and/or configure an offloading rule of an offloading point for the first-type session.

Optionally, the first session management network element may further send the identifier of the first VPLMN roaming offloading information to the second session management network element.

Optionally, the visited SMF network element serving the first session and the visited SMF network element serving the second session may be the same or different. This is not limited in this application.

Optionally, a session creation request includes session allowed indication information.

In a possible design, the session creation request further indicates that the first session management network element does not store the first VPLMN roaming offloading information. For an indication manner of the session creation request, refer to the foregoing design 1 and design 2.

In a possible design, for example, the first session is an HR-SBO session of UE. In this case, the first session management network element in step S801 and step S802 is the visited SMF network element serving the first session. For the manner of triggering the session release procedure of the first session, refer to the foregoing manner A, manner B, and manner C. Details are not described herein again.

In a possible design, in the session creation procedure or the session relocation procedure of the second session, the first session management network element sends a session management response to the second session management network element based on stored second status information, where the second status information indicates whether the first VPLMN roaming offloading information has been sent to the second session management network element, and the session management response indicates whether to configure an EASDF network element for the first-type session by using second VPLMN roaming offloading information stored in the second session management network element. For a method for determining the session management response, refer to the descriptions in step S602. Details are not described herein again.

According to this method, in the session release procedure or the session relocation procedure of the first session, when the first-type session served by the first session network element includes only the first session, the first session management network element may send, to the second session management network element, latest VPLMN roaming offloading information stored in the first session management network element, that is, the first VPLMN roaming offloading information, so that a probability that the second session management network element configures an EASDF network element by using wrong VPLMN roaming offloading information can be reduced, thereby improving communication efficiency.

It should be noted that the communication methods shown in FIG. 3 to FIG. 8 in this application may be used interchangeably, and an execution sequence is not limited.

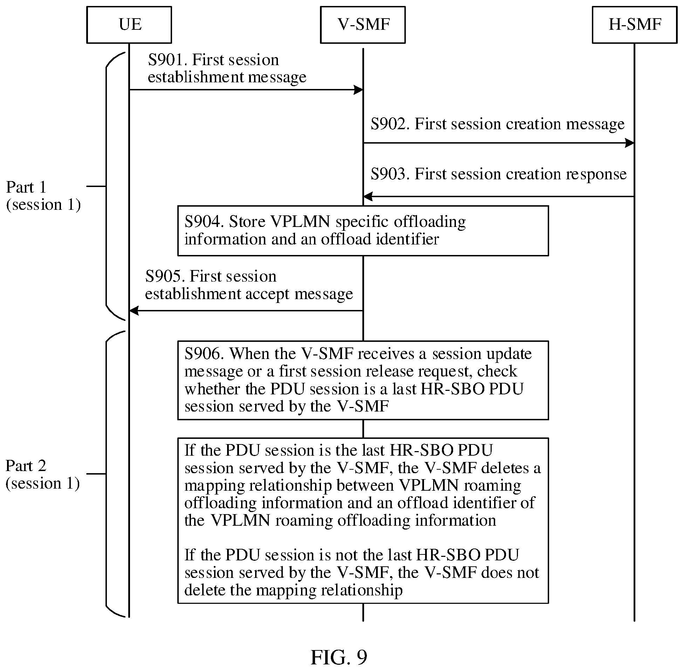

Based on the communication method shown in FIG. 3, FIG. 9 is a possible communication example provided in this application. In this example, a terminal device of a session 1 is UE, a visited SMF network element serving the session 1 is a V-SMF (that is, the first session management network element in FIG. 3), and a home SMF network element serving the session 1 is an H-SMF. The example includes a session establishment procedure and a session release procedure of the session 1. The communication method includes the following steps.

### Part 1 (Establishment of the session 1):

S901. The UE sends a first session establishment message (for example, PDU session_establishment request) to the V-SMF.

S902. The V-SMF sends a first session creation message (for example, nsmf_PDU session_create request) to the H-SMF, where the first session creation message includes HR-SBO request indication (HR-SBO request indication) information.

S903. The H-SMF sends a first session creation response (for example, nsmf_PDU session_create response) to the V-SMF, where the first session creation response includes HR-SBO authorization result (HR-SBO authorization result) information, VPLMN specific offloading information (VPLMN specific offloading info), and an offload identifier (offload ID).

S904. The V-SMF stores the VPLMN specific offloading information and the offload identifier.

Optionally, the V-SMF may further store the storage applicable to all HR-SBO PDU sessions in the current V-SMF (for example, store the storage apply to all HR-SBO PDU sessions).

Optionally, the V-SMF may further store the storage applicable to some HR-SBO PDU sessions having a same characteristic.

S905. The V-SMF sends a first session establishment accept message (for example, PDU session_establishment accept) information to the UE.

### Part 2 (Release of the session 1):

S906. When the V-SMF receives a session update message (for example, nsmf_PDU session_update request) or a first session release request (for example, nsmf_PDU session_release request), the V-SMF checks whether the PDU session (the session 1) is a last HR-SBO PDU session served by the V-SMF.

If the PDU session is the last HR-SBO PDU session served by the V-SMF, the V-SMF deletes a mapping relationship between VPLMN roaming offloading information and an offload identifier of the VPLMN roaming offloading information.

If the PDU session is not the last HR-SBO PDU session served by the V-SMF, the V-SMF does not delete the mapping relationship.

For the action of step S906, refer to the action of "deleting the stored first VPLMN roaming offloading information" in step S301.

It should be understood that a procedure related to another session may be further performed within a period of time between performing the part 1 and performing the part 2. For example, before step S906 is performed, a session modification procedure of the session 1 may be performed, and a session establishment procedure of another session, a session modification procedure of another session, and a session release procedure of another session may be further performed.

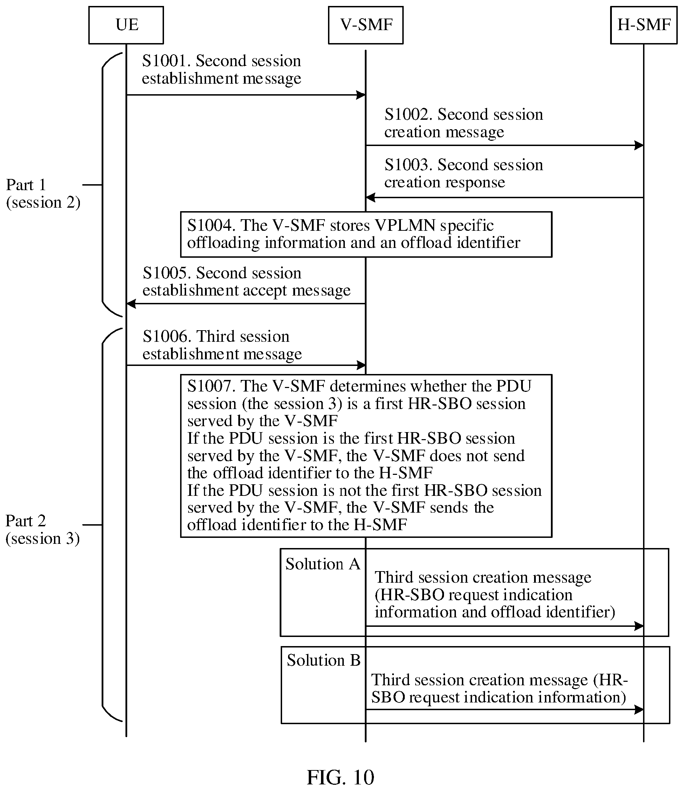

Based on the communication method shown in FIG. 4, FIG. 10 is a possible communication example provided in this application. In this example, terminal devices of a session 2 and a session 3 are UE, visited SMF network elements serving the session 2 and the session 3 are a V-SMF (that is, the first session management network element in FIG. 4), and home SMF network elements serving the two sessions are an H-SMF. The example includes a session establishment procedure of the session 2 and a session establishment procedure of the session 3. The communication method includes the following steps.

### Part 1 (Session 2):

S1001. The UE sends a second session establishment message (for example, PDU session_establishment request) to the V-SMF.

S1002. The V-SMF sends a second session creation message (for example, nsmf_PDU session_create request) to the H-SMF, where the second session creation message includes HR-SBO request indication information.

S1003. The H-SMF sends a second session creation response (for example, nsmf_PDU session_create response) to the V-SMF, where the second session creation response includes HR-SBO authorization result (HR-SBO authorization result) information, VPLMN specific offloading information, and an offload identifier (offload identifier).

S1004. The V-SMF stores the VPLMN specific offloading information and the offload identifier.

Optionally, the V-SMF may further store the storage applicable to all HR-SBO PDU sessions in the current V-SMF (for example, store the storage apply to all HR-SBO PDU sessions).

Optionally, the V-SMF may further store the storage applicable to some HR-SBO PDU sessions having a same characteristic.

S 1005. The V-SMF sends a second session establishment accept message (for example, PDU session_establishment accept) to the UE.

It should be understood that, for a session creation procedure of the session 2 in S 1001 to S1005, refer to a session creation procedure of the session 1 in step S901 to step S905.

### Part 2 (Session 3):

S1006. The UE sends a third session establishment message (for example, PDU session_establishment request) to the V-SMF.

S1007. The V-SMF determines whether the PDU session (the session 3) is a first HR-SBO session served by the V-SMF.

If the PDU session is the first HR-SBO session served by the V-SMF, a solution B is performed: The V-SMF sends a third session creation message (for example, nsmf_PDU session_create request) to the H-SMF, where the third session creation message includes the HR-SBO request indication information and does not include the offload identifier.

If the PDU session is not the first HR-SBO session served by the V-SMF, a solution A is performed: The V-SMF sends a third session creation message (for example, nsmf_PDU session_create request) to the H-SMF, where the third session creation message includes the HR-SBO request indication information and the offload identifier.

Optionally, a characteristic of the session 2 may be the same as or different from a characteristic of the session 3. In other words, the VPLMN specific offloading information corresponding to the session 2 may be the same as or different from VPLMN specific offloading information corresponding to the session 3. For descriptions of a characteristic of a session, refer to the descriptions in step S301. Details are not described herein again.

For the action of step S1007, refer to the action that "the first session management network element sends the session creation request to the second session management network element" in step S401.

It should be understood that a procedure related to another session may be further performed within a period of time between performing the part 1 and performing the part 2. For example, when the characteristic of the session 2 may be the same as the characteristic of the session 3, before step S1006 is performed, a session release procedure of the session 2 may be further performed.

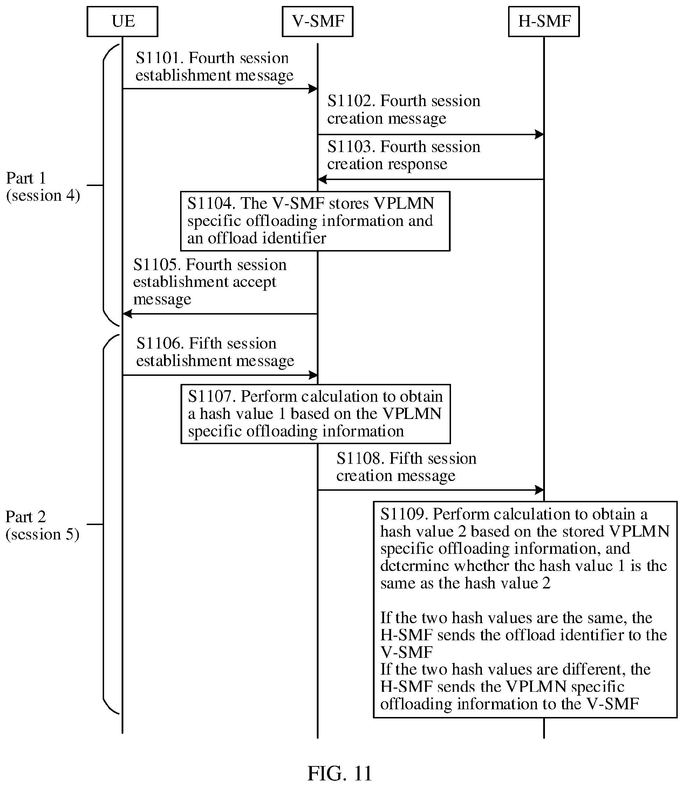

Based on the communication method shown in FIG. 5, FIG. 11 is a possible communication example provided in this application. In this example, terminal devices of a session 4 and a session 5 are UE, visited SMF network elements serving the session 4 and the session 5 are a V-SMF (that is, the first session management network element in FIG. 5), and home SMF network elements serving the two sessions are an H-SMF (that is, the second session management network element in FIG. 5). The example includes a session establishment procedure of the session 4 and a session establishment procedure of the session 5. The communication method includes the following steps.

### Part 1 (Session 4):

S1101. The UE sends a fourth session establishment message (for example, PDU session_establishment request) to the V-SMF.

S1102. The V-SMF sends a fourth session creation message (for example, nsmf_PDU session_create request) to the H-SMF, where the fourth session creation message includes HR-SBO request indication information.

S1103. The H-SMF sends a fourth session creation response (for example, nsmf_PDU session_create response) to the V-SMF, where the fourth session creation response includes HR-SBO authorization result (HR-SBO authorization result) information, VPLMN specific offloading information, and an offload identifier (offload identifier).

S1104. The V-SMF stores the VPLMN specific offloading information and the offload identifier.

Optionally, the V-SMF may further store the storage applicable to all HR-SBO PDU sessions in the current V-SMF (for example, store the storage apply to all HR-SBO PDU sessions).

Optionally, the V-SMF may further store the storage applicable to some HR-SBO PDU sessions having a same characteristic.

S1105. The V-SMF sends a fourth session establishment accept message (for example, PDU session_establishment accept) to the UE.

It should be understood that, for a session creation procedure of the session 4 in S1101 to S1105, refer to a session creation procedure of the session 1 in step S901 to step S905.

### Part 2 (Session 5):

S1106. The UE sends a fifth session establishment message (for example, PDU session_establishment request) to the V-SMF.

S1107. The V-SMF performs calculation to obtain a hash value 1 based on the VPLMN specific offloading information.

S1108. The V-SMF sends a fifth session creation message (for example, nsmf_PDU session_create request) to the H-SMF, where the fifth session creation message includes the HR-SBO request indication information, the offload identifier, and the hash value 1.

S1109. The H-SMF performs calculation to obtain a hash value 2 based on the stored VPLMN specific offloading information. The H-SMF determines whether the hash value 1 is the same as the hash value 2.

If the two hash values are the same, it indicates that the VPLMN specific offloading information stored in the V-SMF is the same as the VPLMN specific offloading information stored in the H-SMF, and the H-SMF sends the offload identifier to the V-SMF.

If the two hash values are different, it indicates that the VPLMN specific offloading information stored in the V-SMF is different from the VPLMN specific offloading information stored in the H-SMF, and the H-SMF sends the VPLMN specific offloading information stored in the H-SMF to the V-SMF.

For the action of step S1109, refer to the action that "the second session management network element sends the session management response to the first session management network element based on the first verification information" in step S502.

It should be understood that a procedure related to another session may be further performed within a period of time between performing the part 1 and performing the part 2.

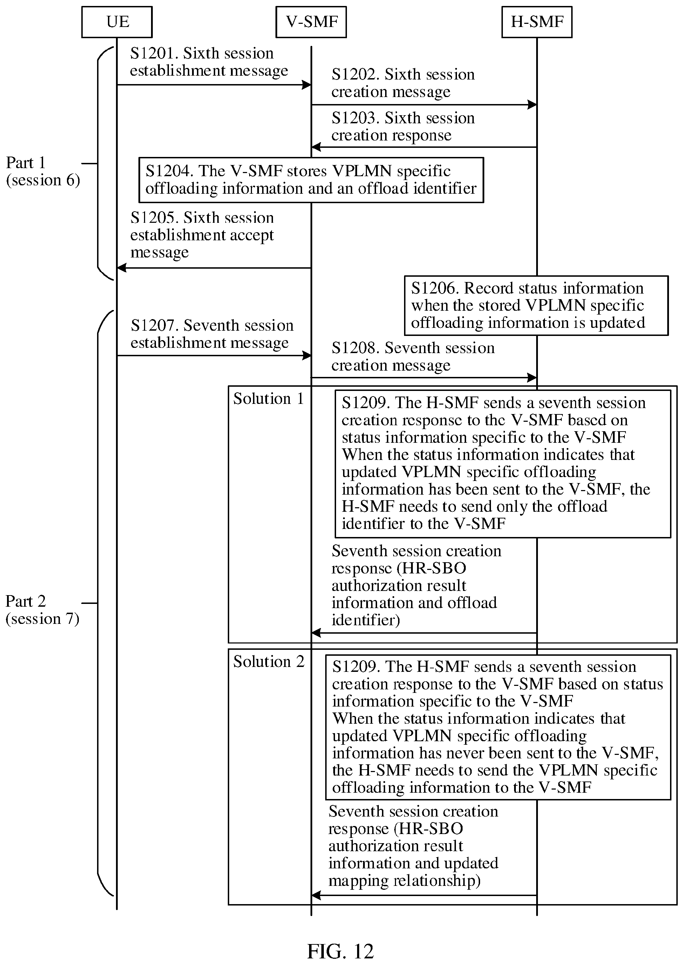

Based on the communication method shown in FIG. 6, FIG. 12 is a possible communication example provided in this application. In this example, terminal devices of a session 6 and a session 7 are UE, visited SMF network elements serving the session 6 and the session 7 are a V-SMF, and home SMF network elements serving the two sessions are an H-SMF (that is, the first session management network element in FIG. 6). The example includes a session establishment procedure of the session 6 and a session establishment procedure of the session 7. The communication method includes the following steps.

### Part 1 (Session 6):

S1201. The UE sends a sixth session establishment message (for example, PDU session_establishment request) to the V-SMF.

S1202. The V-SMF sends a sixth session creation message (for example, nsmf_PDU session_create request) to the H-SMF, where the sixth session creation message includes HR-SBO request indication information.

S1203. The H-SMF sends a sixth session creation response (for example, nsmf_PDU session_create response) to the V-SMF, where the sixth session creation response includes HR-SBO authorization result (HR-SBO authorization result) information, VPLMN specific offloading information, and an offload identifier (offload identifier).

S1204. The V-SMF stores the VPLMN specific offloading information and the offload identifier.

Optionally, the V-SMF may further store the storage applicable to all HR-SBO PDU sessions in the current V-SMF (for example, store the storage apply to all HR-SBO PDU sessions).

Optionally, the V-SMF may further store the storage applicable to some HR-SBO PDU sessions having a same characteristic.

S1205. The V-SMF sends a sixth session establishment accept message (for example, PDU session_establishment accept) to the UE.

It should be understood that, for a session creation procedure of the session 6 in S1201 to S1205, refer to a session creation procedure of the session 1 in step S901 to step S905.

S1206. Record status information when the VPLMN specific offloading information stored in the H-SMF is updated, where the status information indicates whether updated VPLMN specific offloading information has been sent to the V-SMF.

Optionally, for a plurality of different V-SMFs, the H-SMF may record a plurality of pieces of status information.

### Part 2 (Session 7):

S1207. The UE sends a seventh session establishment message (for example, PDU session_establishment request) to the V-SMF.

S1208. The V-SMF sends a seventh session creation message (for example, nsmf_PDU session_create request) to the H-SMF, where the seventh session creation message includes the HR-SBO request indication information and the offload identifier.

S1209. The H-SMF sends a seventh session creation response (for example, nsmf_PDU session_create response) to the V-SMF based on status information specific to the V-SMF.

When the status information indicates that the updated VPLMN specific offloading information has been sent to the V-SMF, the H-SMF performs a solution 1: The H-SMF needs to send only the offload identifier to the V-SMF. In other words, the seventh session creation response includes the HR-SBO authorization result information and the offload identifier.

When the status information indicates that the updated VPLMN specific offloading information has never been sent to the V-SMF, the H-SMF performs a solution 2: The H-SMF needs to send the VPLMN specific offloading information to the V-SMF. In other words, the seventh session creation response includes the HR-SBO authorization result information and an updated mapping relationship (updated mapping). The mapping relationship is a direct mapping relationship between the VPLMN specific offloading information and the offload identifier.

For the action of step S1209, refer to the action that "the first session management network element sends the session management response to the second session management network element based on the stored first status information" in step S602.

It should be understood that a procedure related to another session may be further performed within a period of time between performing the part 1 and performing the part 2.

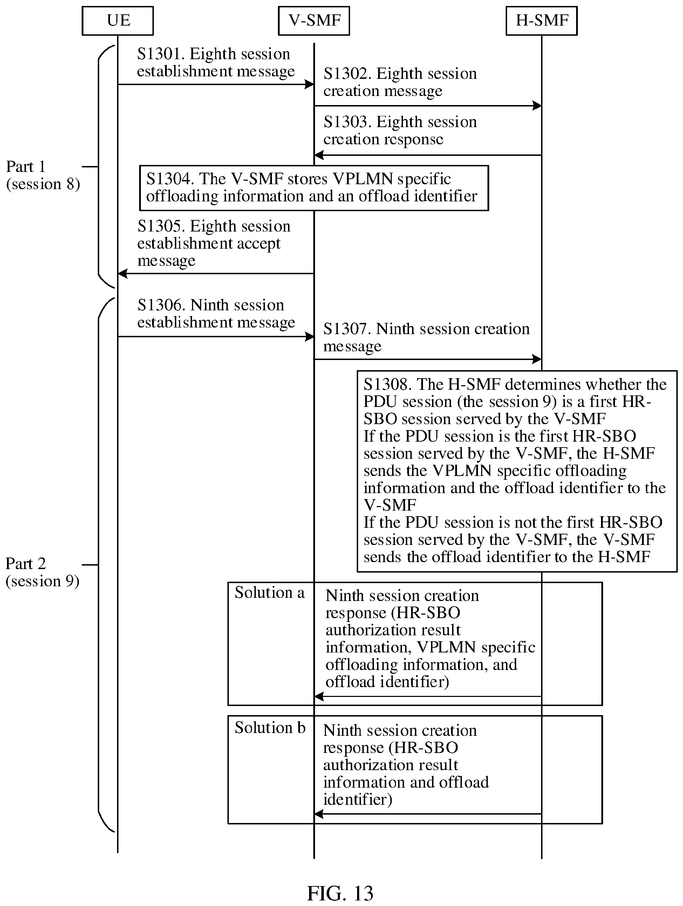

Based on the communication method shown in FIG. 7, FIG. 13 is a possible communication example provided in this application. In this example, terminal devices of a session 8 and a session 9 are UE, visited SMF network elements serving the session 8 and the session 9 are a V-SMF, and home SMF network elements serving the two sessions are an H-SMF (that is, the first session management network element in FIG. 7). The example includes a session establishment procedure of the session 8 and a session establishment procedure of the session 9. The communication method includes the following steps.

### Part 1 (Session 8):

S1301. The UE sends an eighth session establishment message (for example, PDU session_establishment request) to the V-SMF.

S1302. The V-SMF sends an eighth session creation message (for example, nsmf_PDU session_create request) to the H-SMF, where the eighth session creation message includes HR-SBO request indication information.

S1303. The H-SMF sends an eighth session creation response (for example, nsmf_PDU session_create response) to the V-SMF, where the eighth session creation response includes HR-SBO authorization result (HR-SBO authorization result) information, VPLMN specific offloading information, and an offload identifier (offload identifier).

S1304. The V-SMF stores the VPLMN specific offloading information and the offload identifier.

Optionally, the V-SMF may further store the storage applicable to all HR-SBO PDU sessions in the current V-SMF (for example, store the storage apply to all HR-SBO PDU sessions).

Optionally, the V-SMF may further store the storage applicable to some HR-SBO PDU sessions having a same characteristic.

S1305. The V-SMF sends an eighth session establishment accept message (for example, PDU session_establishment accept) to the UE.

It should be understood that, for a session creation procedure of the session 8 in S1301 to S1305, refer to a session creation procedure of the session 1 in step S901 to step S905.

### Part 2 (Session 9):

S1306. The UE sends a ninth session establishment message (for example, PDU session_establishment request) to the V-SMF.

S1307. The V-SMF sends a ninth session creation message (for example, nsmf_PDU session_create request) to the H-SMF, where the ninth session creation message includes the HR-SBO request indication information and the offload identifier.

S1308. The H-SMF determines whether the PDU session (the session 9) is a first HR-SBO session served by the V-SMF.

If the PDU session is the first HR-SBO session served by the V-SMF, a solution a is performed: The H-SMF sends a ninth session creation response (for example, nsmf_PDU session_create response) to the V-SMF, where the ninth session creation response includes the HR-SBO authorization result information, the VPLMN specific offloading information stored in the H-SMF, and the offload identifier stored in the H-SMF.

If the PDU session is not the first HR-SBO session served by the V-SMF, a solution b is performed: The V-SMF sends a ninth session creation response (for example, nsmf_PDU session_create response) to the H-SMF, where the ninth session establishment response includes the HR-SBO authorization result information and the offload identifier.

Optionally, a characteristic of the session 8 may be the same as or different from a characteristic of the session 9.

For the action of step S1308, refer to the action that "the first session management network element sends the first VPLMN roaming offloading information to the second session management network element" in step S701.

It should be understood that a procedure related to another session may be further performed within a period of time between performing the part 1 and performing the part 2. For example, when the characteristic of the session 8 may be the same as the characteristic of the session 9, before step S1306 is performed, a session release procedure of the session 8 may be further performed.

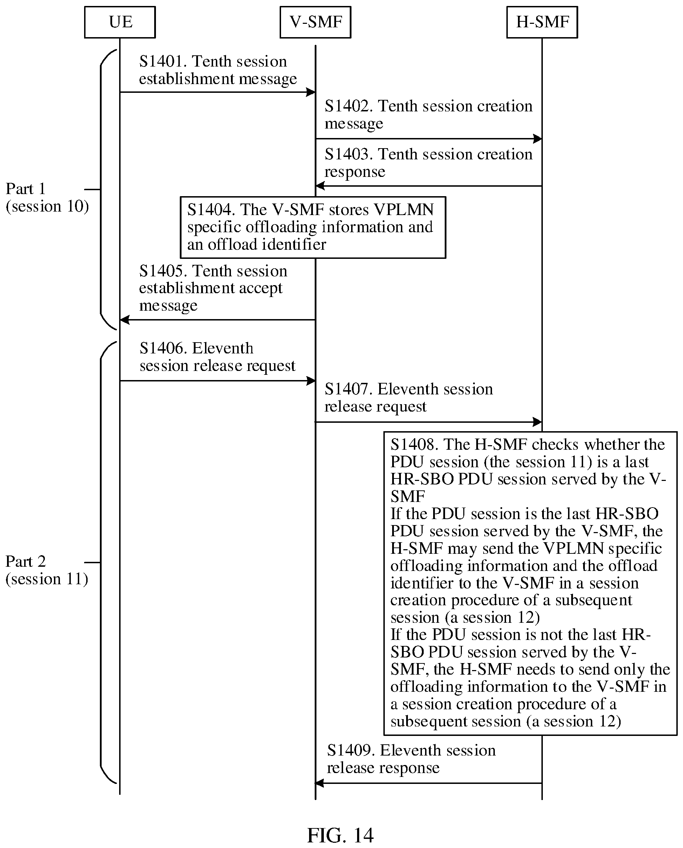

Based on the communication method shown in FIG. 8, FIG. 14 is a possible communication example provided in this application. In this example, terminal devices of a session 10 and a session 11 are UE, visited SMF network elements serving the session 10 and the session 11 are a V-SMF, and home SMF network elements serving the two sessions are an H-SMF (that is, the first session management network element in FIG. 8). The example includes a session establishment procedure of the session 10 and a session release procedure of the session 11. The communication method includes the following steps.

### Part 1 (Session 10):

S1401. The UE sends a tenth session establishment message (for example, PDU session_establishment request) to the V-SMF.

S1402. The V-SMF sends a tenth session creation message (for example, nsmf_PDU session_create request) to the H-SMF, where the tenth session creation message includes HR-SBO request indication information.

S1403. The H-SMF sends a tenth session creation response (for example, nsmf_PDU session_create response) to the V-SMF, where the tenth session creation response includes HR-SBO authorization result (HR-SBO authorization result) information, VPLMN specific offloading information, and an offload identifier (offload identifier).

S1404. The V-SMF stores the VPLMN specific offloading information and the offload identifier.

Optionally, the V-SMF may further store the storage applicable to all HR-SBO PDU sessions in the current V-SMF (for example, store the storage apply to all HR-SBO PDU sessions).

Optionally, the V-SMF may further store the storage applicable to some HR-SBO PDU sessions having a same characteristic.

S1405. The V-SMF sends a tenth session establishment accept message (for example, PDU session_establishment accept) to the UE.

It should be understood that, for a session creation procedure of the session 10 in S1401 to S1405, refer to a session creation procedure of the session 1 in step S901 to step S905.

### Part 2 (Session 11):

S1406. The UE sends an eleventh session release request (for example, PDU session_release request) to the V-SMF.

S1407. The V-SMF sends the eleventh session release request (for example, nsmf_PDU session_release request) to the H-SMF.

S1408. When the H-SMF receives the eleventh session release request, the H-SMF checks whether the PDU session (the session 11) is a last HR-SBO PDU session served by the V-SMF.

If the PDU session is the last HR-SBO PDU session served by the V-SMF, the H-SMF may send the VPLMN specific offloading information and the offload identifier to the V-SMF in a session creation procedure of a subsequent session (a session 12).

If the PDU session is not the last HR-SBO PDU session served by the V-SMF, the H-SMF needs to send only the offload identifier to the V-SMF in a session creation procedure of a subsequent session (a session 12).

S1409. The H-SMF sends an eleventh session release response (for example, nsmf_PDU session_release response) to the V-SMF.

For the action of step S1408, refer to the action that "the first session management network element records the first status information" in step S801.

It should be understood that a procedure related to another session may be further performed within a period of time between performing the part 1 and performing the part 2. For example, before step S1406 is performed, a session establishment procedure of the session 11 and a session release procedure of the session 10 may be further performed.

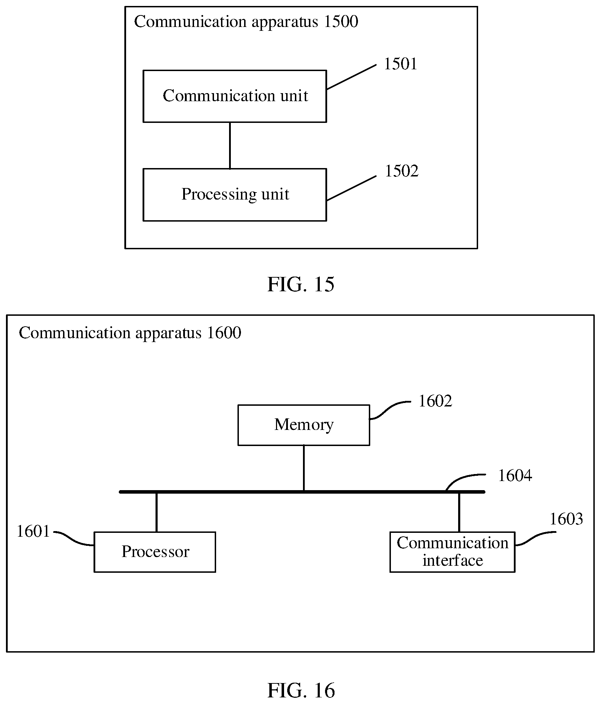

Based on a same technical concept, this application further provides a communication apparatus. The communication apparatus is configured to implement the communication methods provided in the foregoing embodiments. As shown in FIG. 15, the communication apparatus 1500 includes a communication unit 1501 and a processing unit 1502.

In a possible example, based on the communication method shown in FIG. 3, the processing unit 1502 may be a first session management network element. The communication unit 1501 is configured to receive and send data. The processing unit 1502 is configured to: in a session release procedure or a session relocation procedure of a first session, when a served first-type session related to first VPLMN roaming offloading information includes only the first session, delete the stored first VPLMN roaming offloading information, where the first session is a home session offloading session, the first session is related to the first VPLMN roaming offloading information, and the first VPLMN roaming offloading information is used to configure an EASDF network element for the first-type session.

In a possible design, the first-type session related to the first VPLMN roaming offloading information has a same characteristic, and the same characteristic includes at least one of the following: a DNN, S-NSSAI, an HPLMN, a home session offloading session type, or a home session management network element that provides a service.

In a possible design, the processing unit 1502 is specifically configured to delete the first VPLMN roaming offloading information when a session context information set stored in the first session management network element includes only session context information of the first session, where the session context information set is used to store session context information of the first-type session. Based on this, the processing unit 1502 is further configured to delete, in the session release procedure or the session relocation procedure of the first session, the session context information of the first session that is stored in the session context information set.

In a possible design, the processing unit 1502 is specifically configured to delete the first VPLMN roaming offloading information when a mapping relationship that is between an identifier of the first VPLMN roaming offloading information and session information of the first-type session and that is stored in the first session management network element includes only session information of the first session. Based on this, the processing unit 1502 is further configured to delete the session information of the first session in the session release procedure or the session relocation procedure of the first session.

In a possible design, the session information is a session identifier of a session or session context information of a session.

In a possible design, the processing unit 1502 is further configured to delete the identifier of the first VPLMN roaming offloading information when the served first-type session includes only the first session.

In a possible design, the first session management network element is a visited session management network element serving the first session.

In a possible design, the processing unit 1502 is further configured to send a session creation request to a second session management network element in a session creation procedure or a session relocation procedure of a second session, where the second session belongs to the first-type session, and the second session management network element is a home SMF network element serving the second session; and the processing unit 1502 is further configured to receive second VPLMN roaming offloading information from the second session management network element and store the second VPLMN roaming offloading information, where the second VPLMN roaming offloading information is used to configure an EASDF network element for a subsequently created first-type session.

In a possible design, the session creation request further indicates that the first session management network element does not store the first VPLMN roaming offloading information.

In a possible design, the session creation request does not include the identifier of the first VPLMN roaming offloading information; or the session creation request includes a first indication, and the first indication indicates that the first session management network element does not store the first VPLMN roaming offloading information.

In a possible design, the processing unit 1502 is further configured to receive an identifier of the second VPLMN roaming offloading information from the second session management network element and store the identifier of the second VPLMN roaming offloading information.

In a possible design, before the session release procedure or the session relocation procedure of the first session, the processing unit 1502 is further configured to send a session management request to a third session management network element in a session management procedure of the first session, where the session management request includes first verification information, the first verification information is obtained based on the stored first VPLMN roaming offloading information, the first verification information is used to verify whether the first VPLMN roaming offloading information stored in the first session management network element is the same as third VPLMN roaming offloading information stored in the third session management network element, the third session management network element is a home SMF network element serving the first session, and the third VPLMN roaming offloading information is VPLMN roaming offloading information that is related to the first session and that is stored in the third session management network element.

In another possible example, based on the communication method shown in FIG. 4, the processing unit 1502 may be a first session management network element. The communication unit 1501 is configured to receive and send data. The processing unit 1502 is configured to: in a session creation procedure or a session relocation procedure of a first session, send a session creation request to a second session management network element when a session served by the first session management network element does not include any first-type session related to first VPLMN roaming offloading information, where the session creation request indicates that the first session management network element does not store the first VPLMN roaming offloading information; and the processing unit 1502 is further configured to receive the first VPLMN roaming offloading information from the second session management network element and store the first VPLMN roaming offloading information, where the first session is a home session offloading session, the first session is related to the first VPLMN roaming offloading information, and the first VPLMN roaming offloading information is used to configure an EASDF network element for the first-type session.

In this example, the communication apparatus 1500 may further perform any possible design of the communication method in FIG. 4. Details are not described herein again.

In another possible example, based on the communication method shown in FIG. 5, the processing unit 1502 may be a first session management network element. The communication unit 1501 is configured to receive and send data. The processing unit 1502 is configured to send a session management request to a second session management network element in a session management procedure of a first session, where the session management request includes first verification information, the first verification information is obtained based on stored first VPLMN roaming offloading information, the first session is a home session offloading session, the first session is related to the first VPLMN roaming offloading information, and the first VPLMN roaming offloading information is used to configure an EASDF network element for a first-type session; and the processing unit 1502 is further configured to receive a session management response from the second session management network element, where the session management response indicates whether to configure an EASDF network element for the first session by using the first VPLMN roaming offloading information.

In this example, the communication apparatus 1500 may further perform any possible design of the communication method in FIG. 5. Details are not described herein again.

In another possible example, based on the communication method shown in FIG. 5, the processing unit 1502 may be a second session management network element. The communication unit 1501 is configured to receive and send data. The processing unit 1502 is configured to receive, by the second session management network element, a session management request from a first session management network element in a session management procedure of a first session, where the session management request includes first verification information, the first verification information is obtained based on first VPLMN roaming offloading information stored in the first session management network element, the first session is a home session offloading session, and the first session is related to stored second VPLMN roaming offloading information; and the processing unit 1502 is further configured to send a session management response to the first session management network element based on the first verification information, where the session management response indicates whether to configure an EASDF network element for a first-type session related to the second VPLMN roaming offloading information by using the first VPLMN roaming offloading information.

In this example, the communication apparatus 1500 may further perform any possible design of the communication method in FIG. 5. Details are not described herein again.

In another possible example, based on the communication method shown in FIG. 6, the processing unit 1502 may be a first session management network element. The communication unit 1501 is configured to receive and send data. The processing unit 1502 is configured to receive a session management request from a second session management network element in a session management procedure of a first session; and the processing unit 1502 is further configured to send a session management response to the second session management network element based on stored first status information, where the session management response indicates whether to configure an EASDF network element for the first session by using first VPLMN roaming offloading information stored in the second session management network element; and the first session is a home session offloading session, the first session is related to the first VPLMN roaming offloading information, the first status information indicates whether second VPLMN roaming offloading information has been sent to the second session management network element, and the second VPLMN roaming offloading information is latest VPLMN roaming offloading information that is stored in the first session management network element and that is used to configure an EASDF network element for the first session.

In this example, the communication apparatus 1500 may further perform any possible design of the communication method in FIG. 6. Details are not described herein again.

In another possible example, based on the communication method shown in FIG. 7, the processing unit 1502 may be a first session management network element. The communication unit 1501 is configured to receive and send data. The processing unit 1502 is configured to: in a session creation procedure or a session relocation procedure of a first session, when a session served by the first session management network element does not include any first-type session related to first VPLMN roaming offloading information, send the first VPLMN roaming offloading information to a second session management network element, where the first session is a home session offloading session, the first session is related to the first VPLMN roaming offloading information, and the first VPLMN roaming offloading information is used to configure an EASDF network element for the first-type session.

In this example, the communication apparatus 1500 may further perform any possible design of the communication method in FIG. 7. Details are not described herein again.

In another possible example, based on the communication method shown in FIG. 8, the processing unit 1502 may be a first session management network element. The communication unit 1501 is configured to receive and send data. The processing unit 1502 is configured to: in a session release procedure or a session relocation procedure of a first session, record first status information when a served first-type session related to first VPLMN roaming offloading information includes only the first session, where the first status information indicates to send the first VPLMN roaming offloading information to a second session management network element in a session creation procedure or a session relocation procedure of a subsequently created second session; and the first session is a home session offloading session, the second session is a home session offloading session, the second session is related to the first VPLMN roaming offloading information, and the first VPLMN roaming offloading information is used to configure an EASDF network element for the first-type session.

In this example, the communication apparatus 1500 may further perform any possible design of the communication method in FIG. 8. Details are not described herein again.

Based on a same technical concept, an embodiment of this application further provides another communication apparatus. The communication apparatus 1600 may implement the communication methods provided in the foregoing embodiments, and has a function of the communication apparatus 1500 provided in the foregoing embodiments. As shown in FIG. 16, the communication apparatus 1600 includes a memory 1602 and a processor 1601. Optionally, the communication apparatus 1600 further includes a communication interface 1603. The communication interface 1603, the processor 1601, and the memory 1602 are connected to each other.

Optionally, the communication interface 1603, the processor 1601, and the memory 1602 are connected to each other through a bus 1604. The bus 1604 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of description, only one thick line is used to represent the bus in FIG. 16, but this does not mean that there is only one bus or one type of bus.

The communication interface 1603 is configured to receive and send a signal, to implement communication with a device other than the communication apparatus.

For a function of the processor 1601, refer to the descriptions in the foregoing embodiments. Details are not described herein again. The processor 1601 may be a central processing unit (central processing unit, CPU), a network processor (network processor, NP), a combination of a CPU and an NP, or the like. The processor 1601 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof. The processor 1601 may implement the foregoing functions by using hardware or certainly by using hardware executing corresponding software.

The memory 1602 is configured to store program instructions and the like. Specifically, the program instructions may include program code. The program code includes computer operation instructions. The memory 1602 may include a random access memory (random access memory, RAM), or may further include a non-volatile memory (non-volatile memory), for example, at least one magnetic disk memory. The processor 1601 executes the program instructions stored in the memory 1602, to implement the foregoing functions, so as to implement the methods provided in the foregoing embodiments. For example, the memory 1602 may include the first session management network element or the second session management network element shown in embodiments of this application.

Based on a same technical concept, an embodiment of this application further provides a computer program. When the computer program is run on a computer, the computer is caused to perform the methods provided in the foregoing embodiments.

Based on a same technical concept, an embodiment of this application further provides a computer-readable storage medium. The computer-readable storage medium stores a computer program. When the computer program is run on a computer, the computer is caused to perform the methods provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage, a magnetic disk storage medium or another magnetic storage device, or any other medium that can carry or store expected program code in a form of an instruction or a data structure and can be accessed by a computer.

Based on a same technical concept, an embodiment of this application further provides a chip. The chip is configured to read a computer program stored in a memory, to implement the methods provided in the foregoing embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The computer program instructions may alternatively be stored in a computer-readable memory that can guide a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. In this way, this application is also intended to cover these modifications and variations of this application provided that these modifications and variations of this application fall within the scope of the claims of this application and equivalent technologies thereof.

## Claims

1. A communication method, applied to a first session management network element, wherein the method comprises:
in a session release procedure or a session relocation procedure of a first session, deleting, when a served first-type session related to first visited public land mobile network VPLMN roaming offloading information comprises only the first session, the stored first VPLMN roaming offloading information, wherein
the first session is a home session offloading session, and the first VPLMN roaming offloading information is used to configure an edge application server discovery function EASDF network element for the first-type session.

2. The method according to claim 1, wherein the first-type session related to the first VPLMN roaming offloading information has a same characteristic, and the same characteristic comprises at least one of the following:
a data network identifier DNN, single network slice selection assistance information S-NSSAI, a home public land mobile network HPLMN, a home session offloading session type, or a home session management network element that provides a service.

3. The method according to claim 1 or 2, wherein the deleting, when the served first-type session related to the first VPLMN roaming offloading information comprises only the first session, the stored first VPLMN roaming offloading information comprises:
deleting the first VPLMN roaming offloading information when a session context information set stored in the first session management network element comprises only session context information of the first session, wherein the session context information set is used to store session context information of the first-type session; and
the method further comprises:
deleting, in the session release procedure or the session relocation procedure of the first session, the session context information of the first session that is stored in the session context information set.

4. The method according to claim 1 or 2, wherein the deleting, when the served first-type session related to the first VPLMN roaming offloading information comprises only the first session, the stored first VPLMN roaming offloading information comprises:
deleting the first VPLMN roaming offloading information when a mapping relationship that is between an identifier of the first VPLMN roaming offloading information and session information of the first-type session and that is stored in the first session management network element comprises only session information of the first session; and
the method further comprises:
deleting the session information of the first session in the session release procedure or the session relocation procedure of the first session.

5. The method according to claim 4, wherein the session information is a session identifier of a session or session context information of a session.

6. The method according to any one of claims 1 to 5, wherein the method further comprises:
deleting the identifier of the first VPLMN roaming offloading information when the served first-type session comprises only the first session.

7. The method according to any one of claims 1 to 6, wherein the first session management network element is a visited session management network element serving the first session.

8. The method according to any one of claims 1 to 7, wherein the method further comprises:
sending a session creation request to a second session management network element in a session creation procedure or a session relocation procedure of a second session, wherein the second session belongs to the first-type session, and the second session management network element is a home SMF network element serving the second session; and
receiving second VPLMN roaming offloading information from the second session management network element and storing the second VPLMN roaming offloading information, wherein the second VPLMN roaming offloading information is used to configure an EASDF network element for a subsequently created first-type session.

9. The method according to claim 8, wherein the session creation request further indicates that the first session management network element does not store the first VPLMN roaming offloading information.

10. The method according to claim 9, wherein the session creation request does not comprise the identifier of the first VPLMN roaming offloading information; or
the session creation request comprises a first indication, and the first indication indicates that the first session management network element does not store the first VPLMN roaming offloading information.

11. The method according to any one of claims 8 to 10, wherein the method further comprises:
receiving an identifier of the second VPLMN roaming offloading information from the second session management network element and storing the identifier of the second VPLMN roaming offloading information.

12. The method according to any one of claims 1 to 11, wherein before the session release procedure or the session relocation procedure of the first session, the method further comprises:
sending a session management request to a third session management network element in a session management procedure of the first session, wherein
the session management request comprises first verification information, the first verification information is obtained based on the stored first VPLMN roaming offloading information, the first verification information is used to verify whether the first VPLMN roaming offloading information stored in the first session management network element is the same as third VPLMN roaming offloading information stored in the third session management network element, the third session management network element is a home SMF network element serving the first session, and the third VPLMN roaming offloading information is VPLMN roaming offloading information that is related to the first session and that is stored in the third session management network element.

13. A communication method, applied to a first session management network element, wherein the method comprises:
in a session creation procedure or a session relocation procedure of a first session, sending a session creation request to a second session management network element when a session served by the first session management network element does not comprise any first-type session related to first visited public land mobile network VPLMN roaming offloading information, wherein the session creation request indicates that the first session management network element does not store the first VPLMN roaming offloading information; and
receiving the first VPLMN roaming offloading information from the second session management network element and storing the first VPLMN roaming offloading information, wherein
the first session is a home session offloading session, the first session is related to the first VPLMN roaming offloading information, and the first VPLMN roaming offloading information is used to configure an edge application server discovery function EASDF network element for the first-type session.

14. The method according to claim 13, wherein the first-type session related to the first VPLMN roaming offloading information has a same characteristic, and the same characteristic comprises at least one of the following:
a data network identifier DNN, single network slice selection assistance information S-NSSAI, a home public land mobile network HPLMN, a home session offloading session type, or a home session management network element that provides a service.

15. The method according to claim 13 or 14, wherein the session creation request comprises session allowed indication information and does not comprise an identifier of the first VPLMN roaming offloading information, and the session allowed indication information indicates that the first session is allowed to access the EASDF network element through a VPLMN.

16. The method according to any one of claims 13 to 15, wherein the sending the session creation request to the second session management network element when the session served by the first session management network element does not comprise any first-type session related to the first visited public land mobile network VPLMN roaming offloading information comprises:
sending the session creation request to the second session management network element when a session context information set stored in the first session management network element does not comprise session context information of any first-type session, wherein the session context information set is used to store the session context information of the first-type session; and
the method further comprises:
updating the session context information set in the session creation procedure or the session relocation procedure of the first session, wherein an updated session context information set comprises session context information of the first session.

17. The method according to any one of claims 13 to 15, wherein the sending the session creation request to the second session management network element when the session served by the first session management network element does not comprise any first-type session related to the first visited public land mobile network VPLMN roaming offloading information comprises:
sending the session creation request to the second session management network element when the first session management network element does not store a mapping relationship between the identifier of the first VPLMN roaming offloading information and session information of the first-type session; and
after the receiving the first VPLMN roaming offloading information from the second session management network element and storing the first VPLMN roaming offloading information, the method further comprises:
establishing the mapping relationship between the identifier of the first VPLMN roaming offloading information and the session information of the first-type session, wherein the mapping relationship comprises session information of the first session.

18. The method according to claim 17, wherein the session information is a session identifier of a session or session context information of a session.

19. The method according to any one of claims 13 to 18, wherein the method further comprises:
receiving the identifier of the first VPLMN roaming offloading information from the second session management network element and storing the identifier of the first VPLMN roaming offloading information.

20. The method according to any one of claims 13 to 19, wherein the first session management network element is a visited session management network element serving the first session, and the second session management network element is a home SMF network element serving the first session.

21. A communication method, applied to a first session management network element, wherein the method comprises:
in a session release procedure or a session relocation procedure of a first session, recording first status information when a served first-type session related to first visited public land mobile network VPLMN roaming offloading information comprises only the first session, wherein the first status information indicates to send the first VPLMN roaming offloading information to a second session management network element in a session creation procedure or a session relocation procedure of a subsequently created second session; and
the first session is a home session offloading session, the second session is a home session offloading session, the second session is related to the first VPLMN roaming offloading information, and the first VPLMN roaming offloading information is used to configure an edge application server discovery function EASDF network element for the first-type session.

22. The method according to claim 21, wherein the first-type session related to the first VPLMN roaming offloading information has a same characteristic, and the same characteristic comprises at least one of the following:
a data network identifier DNN, single network slice selection assistance information S-NSSAI, a home public land mobile network HPLMN, a home session offloading session type, or a visited session management network element that provides a service.

23. The method according to claim 21 or 22, wherein the recording the first status information when the served first-type session related to the first VPLMN roaming offloading information comprises only the first session comprises:
recording the first status information when a session context information set stored in the first session management network element comprises only session context information of the first session, wherein the session context information set is used to store session context information of the first-type session; and
the method further comprises:
deleting, in the session release procedure or the session relocation procedure of the first session, the session context information of the first session that is stored in the session context information set.

24. The method according to claim 21 or 22, wherein the recording the first status information when the served first-type session related to the first VPLMN roaming offloading information comprises only the first session comprises:
recording the first status information when a mapping relationship that is between an identifier of the first VPLMN roaming offloading information and session information of the first-type session and that is stored in the first session management network element comprises only session information of the first session; and
the method further comprises:
deleting the session information of the first session in the session release procedure or the session relocation procedure of the first session.

25. The method according to claim 24, wherein the session information is a session identifier of a session or session context information of a session.

26. The method according to any one of claims 21 to 25, wherein the first status information further indicates to send the identifier of the first VPLMN roaming offloading information to the second session management network element in the session creation procedure or the session relocation procedure of the subsequently created second session.

27. The method according to any one of claims 21 to 26, wherein the method further comprises: the first session management network element is a home SMF network element serving the first session, and the second session management network element is a visited session management network element serving the second session.

28. A communication apparatus, wherein the apparatus comprises a communication unit and a processing unit, wherein
the communication unit is configured to receive and send data; and
the processing unit is configured to perform the method according to any one of claims 1 to 27.

29. A communication apparatus, comprising a communication interface, a memory, and a processor, wherein
the communication interface is configured to receive and send data;
the memory is configured to store program instructions and data; and
the processor is configured to read the program instructions and the data in the memory, to implement the method according to any one of claims 1 to 27.

30. A computer-readable storage medium, wherein the computer-readable storage medium stores a computer program, and when the computer program is run on a computer, the computer is caused to perform the method according to any one of claims 1 to 27.

31. A computer program product, wherein the computer program product comprises a computer program, and when the computer program is run on a computer, the computer is caused to perform the method according to any one of claims 1 to 27.

32. A chip, wherein the chip comprises a processor and a memory; and the processor is coupled to the memory, and is configured to read a computer program stored in the memory, to perform the method according to any one of claims 1 to 27.
